(19) Europäisches Patentamt
European Patent Office
Office européen des brevets

(11) **EP 2 819 109 B1**

(12) **EUROPÄISCHE PATENTSCHRIFT**

(45) Veröffentlichungstag und Bekanntmachung des Hinweises auf die Patenterteilung:
**27.05.2015   Patentblatt 2015/22**

(51) Int Cl.:
***G08B 13/196*** *(2006.01)*      ***G06K 9/00*** *(2006.01)*

(21) Anmeldenummer: **13174251.2**

(22) Anmeldetag: **28.06.2013**

(54) **Optoelektronischen 3D-Sensor und Verfahren zum Erkennen von Objekten**

Optoelectronic 3D-sensor and method for recognising objects

Capteur optoélectronique 3D et procédé de reconnaissance d'objets

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.12.2014   Patentblatt 2015/01**

(73) Patentinhaber: **SICK AG**
**79183 Waldkirch (DE)**

(72) Erfinder: **Graf, Jürgen**
**79183 Waldkirch (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A1- 2 079 054        EP-A1- 2 275 990**
**US-A1- 2002 061 134**

• **SMITH S M ET AL: "SUSAN - A NEW APPROACH TO LOW LEVEL IMAGE PROCESSING", INTERNATIONAL JOURNAL OF COMPUTER VISION, KLUWER ACADEMIC PUBLISHERS, NORWELL, US, Bd. 23, Nr. 1, 1. Mai 1997 (1997-05-01), Seiten 45-78, XP000696906, ISSN: 0920-5691, DOI: 10.1023/A:1007963824710**

EP 2 819 109 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optoelektronischen 3D-Sensor und ein Verfahren zum Erkennen von Objekten ab einer Mindestgröße innerhalb mindestens eines vorgegebenen Detektionsfeldes nach dem Oberbegriff von Anspruch 1 beziehungsweise 15.

Zu den optoelektronischen 3D-Sensoren zählen zunächst 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

Die dreidimensionalen Bilddaten dienen vielfältigen Zwecken, wie der Vermessung, der Erkennung von Objektpositionen oder -posen oder der Visualisierung. Ein spezielles Anwendungsfeld ist die Sicherheitstechnik, wo der 3D-Sensor als Schutzeinrichtung eingesetzt wird, um einen als kritisch eingestuften Zustand innerhalb des überwachten Raumes zu erkennen, der dann zu einer Warnung oder einer Absicherung einer Gefahrenquelle führt. Die Sicherheitstechnik stellt besondere Anforderungen, weil von der Funktionsfähigkeit des 3D-Sensors Gesundheit oder gar Leben von Personen abhängt. Hier ergibt sich ein Spannungsfeld aus Sicherheit und Verfügbarkeit: Aus Sicherheitsgründen muss praktisch immer der konservative Weg gewählt und im Zweifel eine Abschaltung veranlasst werden. Andererseits stellt jede Abschaltung eine erhebliche und oft kostenträchtige Störung der Abläufe dar, und der 3D-Sensor ist nur praxistauglich, wenn er eine hohe Verfügbarkeit aufweist, also möglichst selten unnötig in den Absicherungszustand übergeht. Da gerade dreidimensionale Bilddaten oft lückenhaft oder mit großen Messfehlern behaftet sind, stellt eine angemessene Verfügbarkeit vor dem Hintergrund der stets vorrangigen Sicherheit eine erhebliche Herausforderung dar.

Eigentlich würde man sich bei sicherheitstechnischen Anwendungen im Rahmen einer vollständig integrierten Mensch-Maschine-Interaktion eine variable, flexible Schutzhülle um sämtliche Gefährdungsquellen wünschen, wie etwa bewegte mechanische Teile oder Roboter. Solche dynamischen Schutzhüllen erfordern hochkomplexe Bildauswertungen, welche im Betrieb die zulässigen Bewegungen der Maschine von unzulässigen Eingriffen durch Bedienpersonal oder Fehlfunktionen anderer Maschinen zuverlässig unterscheiden können. Derartige Systeme sind aber für die Praxis noch nicht weit genug ausgereift, um in der Sicherheitstechnik erfolgreich eingesetzt werden zu können. Erkennungsfehler bei der Bildauswertung würden die Gesundheit des Bedienpersonals gefährden oder, um dies sicher zu vermeiden, durch gehäufte Fehlalarme zu sehr hohen Ausfallzeiten führen und damit die Verfügbarkeit zu stark beschränken. Daher ist es üblich, Schutzfelder vorzukonfigurieren und dann im Betrieb auf unzulässige Objekteingriffe zu überwachen. Dabei schließt ein Vorkonfigurieren nicht aus, dass die Schutzfelder zumindest in gewissen Grenzen während des Betriebs variieren, beispielsweise durch dynamische Auswahl einer bestimmten Konfiguration oder Anpassung der Schutzfelddimensionen in Abhängigkeit des jeweiligen Arbeitsschrittes eines überwachten Roboters.

Die Komplexität der Bildauswertung kann durch definierte Schutzfelder etwas herabgesetzt werden, daraus allein ergibt sich jedoch längst noch keine einfache Lösung für eine sichere Objekterkennung. In sicherheitstechnischen Anwendungen wird typischerweise gefordert, dass ein Objekt mit bestimmten Mindestabmessungen sicher erkannt wird. So leistet ein sicherer Sensor dann je nach Auflösungsvermögen Finger-, Arm-, Bein- oder Körperschutz. Der 3D-Sensor liefert aber eine Tiefenkarte, die weder direkt mit den Detektionsfeldern verglichen werden kann, noch unmittelbar die erforderlichen metrischen Informationen erkennen lässt. Eigentlich ist nämlich der Begriff 3D-Sensor insofern unpräzise, als mit einem optoelektronischen Sensor nur eine Oberfläche erfasst werden kann und die Szene außerdem aus Sicht des Sensors gemäß den Gesetzmäßigkeiten der projektiven Geometrie abgebildet wird. Das ist beispielsweise in der Magnetresonanztomographie anders, wo vollständige und euklidische dreidimensionale Daten erfasst werden. Aus diesem Grund spricht man auch manchmal von einer 2.5D-Abbildung, und eine Tiefenkarte enthält demnach genaugenommen keine dreidimensionalen Bilddaten, sondern ein 2.5D-Entfernungsprofil der Objektoberflächen in der Szenerie. Dieser Unterschied hat erhebliche Auswirkungen, die bei der Auswertung berücksichtigt werden müssen. Denn durch die projektive Aufnahme werden Objektgrößen scheinbar abhängig von der Distanz zu dem Sensor. Die Größe eines Objekts auf der Tiefenkarte entspricht also keineswegs den tatsächlichen Objektabmessungen, denn ein nahes Objekt wird auf wesentlich mehr Pixel abgebildet als ein gleich großes fernes Objekt. Zudem gibt es Abschattungen, also Objekte oder Detektionsfelder, die sich aus Sicht des Sensors hinter anderen Objekten oder Detektionsfeldern befinden.

Im Stand der Technik wird der Einfluss der projektiven Perspektive nicht oder zumindest nicht ausreichend beachtet. Da für eine sicherheitstechnische Zertifizierung kaum Abstriche bei der Sicherheit denkbar sind, schlägt sich dies auf die Verfügbarkeit nieder. Eine weitere nicht zu unterschätzende Randbedingung stellt die erforderliche Rechenleistung, denn die Auswertung soll in den meisten praxisrelevanten Anwendungen zumindest nahezu in Echtzeit erfolgen und muss sich daher auf ein effizient rechenbares Verfahren stützen können.

Eine Verallgemeinerung eines Schutzfeldes auch für Anwendungen außerhalb der Sicherheitstechnik, etwa für die Automatisierungstechnik, wird hier als Detektionsfeld bezeichnet. Detektionsfelder sind virtuell definierte, räumliche Teilbereiche des Erfassungsbereichs des 3D-Sensors, also Volumina mit einer dreidimensionalen geometrischen Beschreibung. Üblicherweise werden Detektionsfelder zur Einrichtzeit festgelegt und zur Laufzeit ausgewertet. Die Detektionsfelder legen fest, welche Bereiche der erfassten Szenerie auf Objekte hin auszuwerten sind, wobei sich dies möglicherweise nur jeweils auf einen bestimmten Zeitpunkt bezieht und sich die Definition der Detektionsfelder zu einem anderen Zeitpunkt verändert. Der Typ des Detektionsfeldes legt fest, welche Art der Auswertung vorzunehmen ist und welche Reaktion ein Objekteingriff in ein Detektionsfeld auslöst. Bei den schon angesprochenen Schutzfeldern führt ein Objekteingriff zu einer sicherheitsgerichteten Abschaltung. Warnfelder sind zumeist Schutzfeldern vorgelagert und lösen einen Alarm aus, ohne direkt in das System einzugreifen, und sollen in der Regel durch den Alarm einen weitergehenden Eingriff in ein Schutzfeld noch rechtzeitig verhindern. Automatisierungsfelder sind der allgemeine Komplementärbegriff zu Schutz- und Warnfeldern, also nicht sicherheitsrelevant, sondern werden beispielsweise in Form eines Funktionsfeldes als virtueller Schalter, als Messfeld zu Bestimmung von Volumina oder andere Messungen genutzt. Die Auswertung von Detektionsfeldern für Aufgaben sowohl der Sicherheitstechnik als auch der Automatisierungstechnik durch den gleichen 3D-Sensor ist aus der EP 2 053 538 A1 bekannt.

Es sind beispielsweise in der EP 2 023 160 B1, EP 2 048 557 B1 oder der DE 10 2005 063 217 A1 verschiedene Möglichkeiten beschrieben, Schutzfelder für einen 3D-Sensor zu konfigurieren. Die Herangehensweise ist dabei vielfältig, sei es durch eine Art CAD-Programm, durch an der Gefahrenquelle oder im Überwachungsbereich angebrachte optische Markierungen oder ein Handgerät, mit dem direkt in der Szenerie Grenzen der gewünschten Schutzfelder angegeben werden können. Diese Dokumente befassen sich aber nicht mit der Frage, wie diese euklidisch definierten Schutzfelder dann effizient und sicher auf Objekteingriffe ausgewertet werden können. Dabei wird die eingangs erläuterte Problematik der projektiven und nicht euklidischen Geometrie des 3D-Sensors, also abstandsabhängige Größenverzerrungen und gegenseitige Abschaltungen von Objekten durch die Perspektive des 3D-Sensors, gar nicht erst angesprochen.

Die EP 2 275 990 B1 befasst sich mit einem weiteren Problem der Auswertung, nämlich mit Lücken in der Tiefenkarte. Lücken werden von einzelnen oder benachbarten Pixeln der Tiefenkarte gebildet, für welche der 3D-Sensor keine zuverlässige Entfernungsschätzung liefert. Gemäß der EP 2 275 990 B1 wird eine doppelte Prüfung vorgenommen, nämlich ob es kritische Lücken oder zusammenhängende Pixelbereiche ohne Lücken gibt, die jeweils größer sind als das kleinste zu detektierende Objekt. Beides wird als sicherheitskritisch betrachtet. Allerdings wird dabei nicht darauf eingegangen, wie man feststellt, ob der kritische Bereich innerhalb eines Schutzfeldes liegt, und ebenso wenig auf die Größenverzerrungen oder Abschattungen durch die projektive Aufnahme.

Es ist daher Aufgabe der Erfindung, die Auswertung einer Tiefenkarte zum Erkennen von Objekten ab einer Mindestgröße innerhalb vorgegebener Detektionsfelder zu verbessern.

Diese Aufgabe wird durch einen optoelektronischen 3D-Sensor und ein Verfahren zum Erkennen von Objekten ab einer Mindestgröße innerhalb mindestens eines vorgegebenen Detektionsfeldes nach Anspruch 1 beziehungsweise 15 gelöst. Die Mindestgröße entspricht einem geforderten Detektions- oder Auflösungsvermögen des 3D-Sensors, beispielsweise um Finger-, Hand-, Arm- oder Körperschutz zu gewährleisten. Mittels einer Konfigurationseinheit sind geometrische Repräsentationen der Detektionsfelder vorgegeben, welche die äußeren Begrenzungsflächen des jeweiligen Detektionsfeldes umfassen oder zumindest deren Bestimmung ermöglichen. Für die Auswertung nimmt ein 3D-Bildsensor, beispielsweise der Aufnahmechip einer 3D-Kamera oder der Lichtempfänger eines Laserscanners, der den wandernden Abtaststrahl registriert, eine pixelaufgelöste Tiefenkarte auf, d.h. ein Bild, welches in seinen Pixeln Abstands-, Entfernungs- oder Tiefenwerte zu Objektstrukturen in der Szenerie hält. Diese Tiefenkarte wird von einer Objekterkennungseinheit auf Objekteingriffe hin ausgewertet. Die Aufgabenverteilung in Konfigurations- und Objekterkennungseinheit dient hierbei nur einer übersichtlichen Darstellung. Ist eine Aufgabe der Konfigurationseinheit zugeordnet, so bedeutet dies, dass sie schon zur Einrichtzeit erledigt werden kann, aber nicht muss. Deshalb kann sich die Aufgabenverteilung bis hin zu einer vollständigen Bearbeitung durch eine gemeinsame Einheit verschieben, ohne dass solche von der Erfindung umfassten Varianten noch eigens erläutert werden.

Die Erfindung geht dann von dem Grundgedanken aus, bei der Überprüfung auf Objekteingriffe in Detektionsfelder je nach Sichtrichtung eine bestimmte, von der Sichtrichtung und der aufzulösenden Mindestgröße abhängige Schablone zu verwenden, die mit dem Bereich der Tiefenkarte in dieser Sichtrichtung verglichen wird. Bei guter oder sogar völliger Übereinstimmung zwischen der Schablone und dem relevanten Ausschnitt der Tiefenkarte in Sichtrichtung gilt ein Objekt der Mindestgröße als in einem Detektionsfeld erfasst. Die Sichtrichtung entspricht einem bestimmten Pixel der Tiefenkarte, und für die Erfassung aller Objekte im gesamten Sichtbereich des 3D-Sensors werden dementsprechend vorzugsweise sämtliche Pixel und dadurch festgelegten Sichtrichtungen geprüft. Die jeweilige Schablone repräsentiert die Abschattungen von Detektionsfeldern in Sichtrichtung, die ein dort angeordnetes virtuelles Objekt der Mindestabmessungen verursacht. Die Schablone unterscheidet sich damit insbesondere in ihrer Größe je nachdem, wie weit entfernt ein Detektionsfeld in Sichtrichtung angeordnet ist. Damit berücksichtigt die Schablone die Größenverzerrungen und möglichen Abschattungen durch die projektive Perspektive des 3D-Sensors bei unterschiedlichen Abständen und Orientierungen von Detektionsfeldern.

Die Erfindung hat den Vorteil, dass die Objekterkennung auf eine besonders effiziente Weise erfolgt, welche die projektive Perspektive berücksichtigt. Dabei wird, sofern gewünscht, die Sicherheit stets gewährleistet. Die Verfügbarkeit wird möglichst wenig beschränkt und kann abgeschätzt und angegeben werden. Das Vorgehen ist flexibel an eine Mindestgröße und damit eine gewünschte Anforderung an das Detektionsvermögen des 3D-Sensors anpassbar. Durch Automatisierungsfelder als besondere Ausprägung der Detektionsfelder werden auch nicht sicherheitstechnische Anwendungen etwa der Automatisierungstechnik erschlossen oder als Zusatzfunktion angeboten. Die Schablonen sind unabhängig von der Tiefenkarte, können also vorab berechnet werden, um so die Rechenkapazitäten zur Laufzeit erheblich zu entlasten. Eine parallele Auswertung zur Beschleunigung ist leicht möglich, beispielsweise indem unterschiedliche Sichtrichtungen gleichzeitig geprüft werden.

Die Konfigurationseinheit ist bevorzugt dafür ausgebildet, die für die Sichtrichtung und Mindestgröße geeignete Schablone aus dem projektiven Schatten einer virtuellen Kugel der Mindestgröße auf einer Grenzfläche eines Detektionsfeldes zu bestimmen. Eine Kugel entspricht in jeder Position und Orientierung der Mindestgröße. Für sicherheitstechnische Auswertungen ist stets der schlechteste Fall anzunehmen, also konservativ abzuschätzen. Dazu ordnet man die virtuelle Kugel an der fernsten Grenzfläche eines Detektionsfeldes in Sichtrichtung an und bestimmt deren Schatten auf die Grenzfläche. Je nach Abmessungen der virtuellen Kugel, also gefordertem Auflösungsvermögen sowie Geometrie des relevanten Detektionsfeldes passt der Schatten nicht vollständig auf eine Grenzfläche, so dass auch noch benachbarte Grenzflächen einbezogen werden, auf die der Schatten fällt. Wenn die Auswertung mit einer so erzeugten Schablone kein Objekt ergibt, kann sich erst recht kein größeres oder näheres Objekt in Lücken oder Abschattungen verbergen.

Im Einzelnen werden dabei bevorzugt einige oder alle der folgenden Schritte vollzogen:

- Bestimme die gegenüber dem 3D-Sensor fernste Grenzfläche eines Detektionsfeldes in Sichtrichtung;
- Platziere eine virtuelle Kugel mit der Mindestgröße entsprechendem Radius mit ihrem Mittelpunkt an dem Schnittpunkt einer Projektionslinie in Sichtrichtung mit der fernsten Grenzfläche;
- Bestimme den projektiven Schatten der Kugel an der fernsten Grenzfläche oder an dazu benachbarten Grenzflächen; und
- Verwende das zweidimensionale Abbild des Schattens in dem 3D-Sensor als Schablone.

Die Konfigurationseinheit ist bevorzugt dafür ausgebildet, die für die Sichtrichtung und Mindestgröße geeignete Schablone aufzufinden, indem von einem Aufpunkt, in dem ein Strahl in Sichtrichtung eine Grenzfläche eines Detektionsfeldes schneidet, virtuelle Linien einer euklidischen Länge entsprechend der Mindestgröße in verschiedene Richtungen gezogen werden, welche der Grenzfläche oder benachbarten Grenzflächen folgen, und die in Pixeln auf einem virtuellen zweidimensionalen Abbild aus Perspektive des 3D-Sensors repräsentierten Linien die Schablone festlegen. Es sollten vorzugsweise Linien in alle Richtungen gezogen werden, um die optimale Schablone aufzufinden. Alternativ wird die Schablone in Richtungen, die nicht durch eine Linie vermessen wurden, durch die kürzeste vermessene Linie ergänzt, bis hin zu dem Extremfall, dass die erste Linie, welche in ihrer euklidischen Länge die Mindestgröße erreicht, die Schablone für alle Richtungen bestimmt, also als kleinster einbeschriebener Kreis. Anschaulich gesprochen vermisst man mit der jeweils kürzesten Linie den ungünstigsten Fall, wie ein Schatten durch ein Objekt der Mindestgröße ein Detektionsfeld treffen kann. Wenn die Schablone diesen Fall korrekt erfasst, ist undenkbar, dass ein Objekt der Mindestgröße in dem Detektionsfeld übersehen wird.

Im Einzelnen werden dabei bevorzugt einige oder alle der folgenden Schritte vollzogen:

- Bestimme die gegenüber dem 3D-Sensor fernste Grenzfläche eines Detektionsfeldes in Sichtrichtung;
- Bestimme den Schnittpunkt einer Projektionslinie in Sichtrichtung mit der fernsten Grenzfläche;
- Ziehe von dem Schnittpunkt mindestens eine dreidimensionale Linie innerhalb der fernsten Grenzfläche oder dazu benachbarten Grenzflächen mit einer euklidisch bestimmten Länge entsprechend der Mindestgröße;
- Bestimme in einem virtuellen zweidimensionalen Abbild aus Perspektive des 3D-Sensors die zugehörige Repräsentation der Linien und die Schablone als Gesamtheit dieser Repräsentationen.

Dabei wird einerseits euklidisch gemessen, wie weit die Linie gehen darf, um die Mindestgröße nicht zu überschreiten, und andererseits bestimmt, auf welche Pixel diese Linie in dem 3D-Sensor angesichts der Entfernung und Verzerrung abgebildet wird. Damit ist die Schablone gebildet.

Vorzugsweise wird nur eine virtuelle Linie gezogen, welche dem größten Gefälle folgt, und deren in Pixel gemessene Länge die Schablone festlegt. Das größte Gefälle wird durch den negativen Gradienten der Grenzfläche oder, wo zwei Grenzflächen aufeinanderstoßen, möglicherweise durch den Gradienten der Schnittlinie aufgefunden. Der Aufwand zu dessen Bestimmung ist also überschaubar und wird zumeist den Aufwand dafür überwiegen, Linien in alle denkbaren Richtungen zu ziehen. Das größte negative Gefälle maximiert den Effekt der Größenverzerrung durch Abstand zu dem 3D-Sensor, so dass eine so aufgefundene Schablone die Sicherheit wahrt. Die über die so vermessene Größe festgelegte Schablone ist vorzugsweise kreisförmig.

Die Linien werden vorzugsweise mit einer Subpixelauflösung vermessen. Für die euklidische Länge kann dazu die geometrische Definition der Detektionsfelder verwendet werden. Es wird also für diesen Teilschritt zunächst kontinuierlich gerechnet und dadurch ein Diskretisierungsfehler zumindest in den Zwischenschritten vermieden. Für die Bestimmung der in Pixeln gemessenen Länge einer Linie muss man die Linie auf ein diskretes Gitter legen, das durch die Pixel vorgegeben wird, und dann die Pixel nicht diskret, sondern entsprechend dem tatsächlich von der Linie durchlaufenen Anteil werten. Eine Subpixelauswertung ist vergleichsweise aufwändig. Wenn aber die Schablonen schon zur Einrichtzeit bestimmt werden, überwiegt der Vorteil einer größeren Verfügbarkeit durch optimierte Schablonen diesen Aufwand.

Die Schablonen sind vorzugsweise Kreise verschiedenen Durchmessers. Das beschränkt die Auswahl möglicher Schablonen ganz erheblich, denn nun muss nur noch ein Radius- oder Durchmesserparameter festgelegt werden. Damit die Schablone direkt mit Pixelgruppen aus der Tiefenkarte bestimmten Pixeln verglichen werden kann, ist der Kreis vorzugsweise in Pixeln diskretisiert. Das beschränkt die denkbare Auswahl noch weiter. Zwischen der Schablone maximaler Größe für eine minimale Reichweite des 3D-Sensors und der Schablone minimaler Größe für eine maximale Reichweite werden wegen der diskreten Pixelauflösung nur vergleichweise wenige Schablonen, beispielsweise weniger als zehn, einige zehn oder einige hundert Schablonen gebraucht. Das hängt von der Pixelzahl des Bildsensors und dem durch die minimale und maximale Reichweite eingeschlossenen Arbeitsvolumen ab.

Vorzugsweise ist eine Vielzahl von Schablonen vorgegeben, und die Erzeugung der Schablonen umfasst eine Auswahl einer vorgegebenen Schablone. Es gibt also einen festen Katalog von Schablonen, und die Bestimmung der Schablone reduziert sich auf die richtige Auswahl. Dabei sind die Schablonen beispielsweise als Pixelmatrix oder durch geometrische Parameter wie Kantenlängen, Eckpunkte und dergleichen hinterlegt. Aus Gründen der Verfügbarkeit sollte stets die größtmögliche Schablone gewählt werden. Hat man beispielsweise den Schatten einer virtuellen Kugel wie im vorigen Absatz ermittelt, so wird in dieser Ausführungsform die größte in den Schatten einschreibbare Schablone verwendet. Die kleinste aller Schablonen entsprechend einer maximalen Entfernung des Detektionsfeldes zum 3D-Sensor kann aus sicherheitstechnischer Sicht immer verwendet werden, schafft aber nur minimale Verfügbarkeit.

Die Konfigurationseinheit ist bevorzugt dafür ausgebildet, aus der Mindestgröße und den Detektionsfeldern eine LARA-Karte zu berechnen, die in ihren Pixeln einen Verweis enthält, welche Schablone für eine dem Pixel entsprechende Sichtrichtung zu verwenden ist. LARA-Karte (lokal-adaptiver Radiergummi) ist zunächst nur ein Name für ein 2D-Pixelbild vorzugsweise in gleicher Auflösung wie die Tiefenkarte. Ein alternativer Name ist Schablonenkarte, denn die LARA-Karte enthält in ihren Pixeln statt Bild- oder Tiefeninformationen Schablonennummern, also Labels, Verweise oder Referenzen, welche die zu wählende Schablone festlegen. Die Erzeugung einer Schablone für eine Sichtrichtung ist vergleichsweise aufwändig und zudem völlig unabhängig von der Tiefenkarte. Daher kann dieser Schritt in die Einrichtzeit vorverlagert werden. Die Erzeugung einer Schablone während der Laufzeit reduziert sich dann darauf, die richtige Schablone aus dem korrespondierenden Pixel der LARA-Karte auszulesen. Die Schablonen selbst sind beispielsweise in einem eigenen Speicher abgelegt, in den der Eintrag in der LARA-Karte indexiert, oder sie wird zur Laufzeit aus dem Verweis generiert, beispielsweise als Kreis mit durch die LARA-Karte vorgegebenem Radius.

Die Konfigurationseinheit ist bevorzugt dafür ausgebildet, aus den vorgegebenen Detektionsfeldern mindestens eine Referenzkarte zu erzeugen, in welcher die Detektionsfelder in die projektive Perspektive des 3D-Sensors und somit in ein direkt mit der Tiefenkarte vergleichbares Format umgerechnet sind. Die Referenztiefenkarte oder Referenzkarte ist wie die Tiefenkarte ein pixelaufgelöstes Bild, dessen Pixel aber Entfernungswerte zu den virtuellen Detektionsfeldern und nicht den tatsächlichen Objekten enthalten. Außerdem sind diese Entfernungen in die projektive Perspektive des 3D-Sensors umgerechnet, d.h. es sind Entfernungen bezüglich des 3D-Bildsensors beziehungsweise bezüglich dessen Empfangsoptik und berücksichtigen damit Größenverzerrungen und Abschattungen. Die Referenzkarte beschleunigt die Objekterkennung in Detektionsfeldern und berücksichtigt die Projektivität des 3D-Bildsensors beziehungsweise von dessen Abbildungsoptik. Außerdem kann die Referenzkarte auch vorteilhaft zur Bestimmung oder Auswahl von Schablonen sowie als Zwischenschritt für die Berechnung einer LARA-Karte verwendet werden.

Vorzugsweise ist in Pixeln der Referenzkarte jeweils der Abstand von dem 3D-Sensor zu einer in der durch das jeweilige Pixel vorgegebenen Richtung befindlichen Feldgrenze eines Detektionsfeldes eingetragen. Die Referenzkarte sieht also genau aus wie eine Tiefenkarte einer fiktiven Szenerie, in der sich ausschließlich die Detektionsfelder als geometrische Körper befinden. Pixel entsprechend einer Sichtrichtung, in der sich kein Detektionsfeld befindet, werden auf einen Initialwert gesetzt, der vorzugsweise unendlich beziehungsweise einer maximalen Reichweite des 3D-Sensors entspricht. Bei mehreren in der gleichen Richtung hintereinander liegenden Feldgrenzen ist in die Referenzkarte vorzugsweise der Abstand der am weitesten entfernten Feldgrenze eingetragen. Dies gilt vor allem für Sicherheitsanwendungen, in denen ein fehlerhaft erkanntes Objekt nur einen Fehlalarm, ein übersehenes Objekt dagegen ein nicht hinnehmbares Sicherheitsrisiko bedeutet. Näher betrachtet werden müssen dabei alle Objekte, die einen Teil eines Detektionsfeldes abschatten könnten, so dass nur Objekte jenseits der fernsten Feldgrenze ignoriert werden dürfen.

Die Konfigurationseinheit ist bevorzugt dafür ausgebildet, zur Bestimmung des Abstands einen Strahl in die durch das Pixel vorgegebenen Richtung zu verfolgen und dessen Schnittpunkt mit aus den Feldgrenzen gebildeten Grenzflächen des Detektionsfelds zu ermitteln. Dazu werden nochmals bevorzugt die Detektionsfelder in Grenzflächen zerlegt, eine Bodenfläche in maximalem Abstand zu dem 3D-Sensor wird in Rechtecke entsprechend den Pixeln der Referenzkarte unterteilt, und für jedes Pixel wird virtuell ein Strahl in den 3D-Sensor zurückverfolgt. Der Schnittpunkt des Strahls mit einer Grenzfläche bestimmt den für dieses Pixel einzutragenden Abstand.

Die Konfigurationseinheit ist bevorzugt dafür ausgebildet, ein lineares Gleichungssystem für die Schnittpunktbestimmung des Strahls mit der Ebene der Grenzfläche zu lösen und den Abstand des Schnittpunkts nur in die Referenzkarte zu übernehmen, wenn einerseits der Schnittpunkt innerhalb der Grenzfläche liegt und andererseits für diese Richtung in der Referenzkarte nicht bereits ein kleinerer Abstand eingetragen ist. Das lineare Gleichungssystem ist die mathematische Repräsentation des Schnittpunktproblems bei der Strahlrückverfolgung. Dieses Gleichungssystem kann ungültige Lösungen liefern, die zwar in der Ebene der Grenzfläche, nicht aber innerhalb der endlichen Grenzfläche selbst liegen und die aussortiert werden sollten. Außerdem kann ein Strahl mehrere Grenzflächen schneiden, und diese Mehrdeutigkeit wird vorzugsweise ausgeschlossen, indem nur der größte Abstandswert in dem Pixel gespeichert wird.

Die Konfigurationseinheit ist bevorzugt dafür ausgebildet, bei Vorgabe mehrerer Detektionsfelder die Detektionsfelder auf mehrere Referenzkarten zu verteilen, um zu verhindern, dass innerhalb einer Referenzkarte ein Detektionsfeld aus Sicht des 3D-Sensors im Schatten eines anderen Detektionsfelds liegt. Die Objekterkennung legt dann die mehreren Referenzkarten jeweils einer sequentiell oder parallel abzuarbeitenden Auswertung zugrunde, um alle Detektionsfelder zu berücksichtigen. Das zuvor erwähnte mögliche Vorgehen, bei Überlappungen von Detektionsfeldern in der Referenzkarte jeweils nur den größten Abstand zu speichern, sorgt zwar auch bei gegenseitig abschattenden Detektionsfeldern für eine sichere Auswertung. Effektiv werden aber dadurch Detektionsfelder miteinander verschmolzen, dabei entgegen der ursprünglichen Konfiguration auch ein Zwischenbereich in das Detektionsfeld eingeschlossen. Um das zu vermeiden, werden mehrere Referenzkarten gebildet, die in dem Sinne entflochten sind, dass solche ungewollten Verbindungen von Detektionsfeldern vermieden sind. Die Bedingung, dass keine Detektionsfelder im Schatten eines anderen Detektionsfeldes liegen, kann natürlich auch bei der Konfiguration erzwungen werden. Das schränkt aber die möglichen Konfigurationen deutlich ein und erfordert jedenfalls große Erfahrung des Benutzers. Die überlappungsfreie Verteilung von Detektionsfeldern auf möglichst wenige Referenzkarten ist ein Optimierungsproblem. Man kann dies beispielsweise mit einem Brute-Force-Ansatz lösen, bei dem eine feste Anzahl verfügbarer Referenzkarten vorgegeben oder diese Anzahl nach und nach erhöht wird, bis durch systematisches Ausprobieren aller Verteilungsmöglichkeiten eine Lösung gefunden ist. Theoretisch kann auch ein Brute-Force-Ansatz scheitern, weil das Färbungsproblem nicht gänzlich allgemein entscheidbar ist, aber für praktisch relevante Fälle spielt das keine Rolle.

Die Objekterkennungseinheit ist bevorzugt dafür ausgebildet, eine Differenzkarte als Differenz von Tiefenkarte und Referenzkarte zu bilden und nur solche Sichtrichtungen mit Hilfe einer Schablone auf Objekteingriffe zu prüfen, in denen die Differenzkarte ein Objekt vor oder in einem Detektionsfeld anzeigt. Der Differenzkarte kann entnommen werden, in welchen Sichtrichtungen beziehungsweise bei welchen Pixeln sich eine Struktur der Szenerie näher an der Kamera befindet als ein Detektionsfeld. Genau an solchen Stellen liegt also ein Teil eines Objekts in einem Detektionsfeld oder schattet das Detektionsfeld ab, was zumindest in Sicherheitsanwendungen gleichwertig behandelt wird.

Die Objekterkennungseinheit ist bevorzugt dafür ausgebildet, eine Differenzkarte als Binärkarte zu erzeugen, die in ihren Pixeln lediglich das Vorzeichen der Abstandswerte der Differenzkarte enthält, und nur solche Sichtrichtungen mit Hilfe einer Schablone auf Objekteingriffe zu prüfen, in denen die Binärkarte ein bestimmtes Vorzeichen aufweist. Eine derartige Binärkarte benötigt weniger Speicher als eine Differenzkarte, ist schneller auswertbar und enthält dennoch alle relevanten Informationen. Das Vorzeichen wird beispielsweise mit Eins codiert, wenn die Tiefenkarte den kleineren Wert enthält als die Referenzkarte. Dies sind die für die Objekterkennung kritischen Pixel, in denen eine Objektstruktur in einem Detektionsfeld liegt oder dieses abschattet. Die übrigen Pixel mit Wert Null müssen gar nicht erst mit einer Schablone auf einen relevanten Objekteingriff geprüft werden. Für die Codierung des Vorzeichens kann selbstverständlich auch eine andere Konvention getroffen werden.

In einer besonders bevorzugten Auswertung werden die Schablonen ebenfalls nur mit 1 Bit codiert und mit der in Sichtrichtung gelegenen Nachbarschaft der Binärkarte verglichen, die aus der Tiefenkarte abgeleitet ist. Damit kann der Grad an Übereinstimmung mit einfachen Binäroperationen bestimmt werden.

Die Objekterkennungseinheit ist bevorzugt dafür ausgebildet, einen Objekteingriff zu erkennen, wenn der Vergleich von Schablone und Nachbarschaft in der Tiefenkarte eine Übereinstimmung mit einer festgelegten Korrelationsgüte ergibt. Schablonen passen perfekt, wenn die gesamte Schablone mit Objektstrukturen übereinstimmt. Im Falle einer 1-bittigen Schablone und Vergleich mit einer Binärkarte sind für eine maximale Korrelationsgüte sämtliche gesetzten Pixel der Schablone auch in der Binärkarte gesetzt. Ein Objekt kann aber bereits bei weniger als perfekter Übereinstimmung als erkannt gelten, und umgekehrt kann unter Umständen trotz perfekter Übereinstimmung noch kein Eingriff in ein Detektionsfeld ausgelöst werden.

Die Korrelationsgüte wird bevorzugt durch die Anzahl übereinstimmender, die Anzahl nicht übereinstimmender Pixel und/oder das Verhältnis übereinstimmender zu nicht übereinstimmender Pixel bewertet. Das sind einfache Maße für eine Toleranz bei dem Vergleich zwischen Schablone und dem relevanten Bereich der Tiefen- oder Binärkarte. Eine weitere Alternative, um Toleranzen gerade gegenüber kurzzeitigen Störern zu schaffen, ist eine Mehrfachauswertung nacheinander aufgenommener Tiefenkarten.

Vorzugsweise ist ein sicherer Ausgang vorgesehen, über welchen durch die Objekterkennungseinheit ein sicherheitsgerichtetes Abschaltsignal an eine überwachte Gefahrenquelle ausgebbar ist, sobald ein unzulässiger Objekteingriff in ein als Schutzfeld ausgebildetes Detektionsfeld erkannt ist. Wie soeben erläutert, ist nicht jeglicher Objekteingriff automatisch sicherheitskritisch. Beispielsweise werden Objekteingriffe zugelassen, die nur kleine Bereiche betreffen, die nur von sehr kurzer Dauer sind oder die sich nach sonstigen Eigenschaften wie Kontur, Größe, Position, Bewegungsrichtung oder Geschwindigkeit des Eingriff einem erlaubten Objekt zuordnen lassen. Für Diagnosezwecke oder ein erleichtertes Wiederanfahren kann mit dem sicherheitsgerichteten Abschaltsignal auch angegeben werden, welches Schutzfeld die Absicherung ausgelöst hat, oder auch eine Tiefenkarte mit der Position des auslösenden Objekts angezeigt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1       eine schematische räumliche Gesamtdarstellung eines 3D-Sensors;

Fig. 2       eine beispielhafte Darstellung einer Referenzkarte mit einem Detektionsfeld;

Fig. 3       ein Beispiel einer Überlagerung einer Tiefenkarte mit der Referenzkarte gemäß Figur 2;

Fig. 4       eine aus der Referenzkarte der Figur 1 und der Tiefenkarte der Figur 3 gebildete Differenz- beziehungsweise Binärkarte;

Fig. 5a-b    zwei Beispiele für einen Vergleich einer von der Sichtrichtung abhängigen Schablone mit einem Ausschnitt einer Binärkarte;

Fig. 6       zwei zueinander senkrechte Seitenansichten eines Detektionsfeldes;

Fig. 7a      eine Seitenansicht eines Detektionsfeldes mit einem Objekt an einer Grenzfläche;

Fig. 7b      eine Ansicht gemäß Figur 6a aus der projektiven Perspektive eines 3D-Sensors;

Fig. 8       ein Ausschnitt einer Grenzfläche des Detektionsfeldes gemäß Figur 7 aus der projektiven Perspektive eines 3D-Sensors; und

Fig. 9       eine Übersichtsdarstellung der Funktionsblöcke zur Konfiguration und Auswertung von Detektionsfeldern.

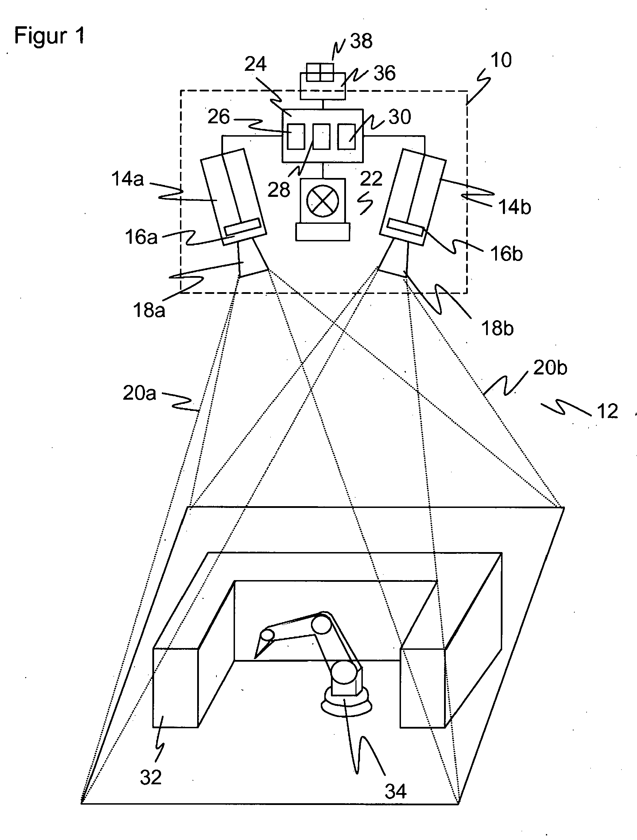

Figur 1 zeigt in einer schematischen dreidimensionalen Darstellung den allgemeinen Aufbau eines 3D-Sensors 10 zur Aufnahme einer Tiefenkarte eines Raumbereichs 12. Der dargestellte und im Folgenden beschriebene 3D-Sensor 10 ist eine Stereokamera. Die Erfindung ist aber darauf nicht beschränkt, sondern umfasst ebenso andere optoelektronische 3D-Sensoren, insbesondere die einleitend genannten anderen 3D-Kameras mit Bestimmung der Lichtlaufzeit oder einer Auswertung der Störung passiver zweidimensionaler Muster oder von projizierten Beleuchtungsmustern sowie Laserscanner. Der 3D-Sensor 10 ist für eine Aufnahme von oben montiert, was oft vorteilhaft ist und auch an manchen Stellen in dieser Beschreibung die Sprache der geometrischen Beziehungen prägt. Dennoch kann der 3D-Sensor 10 ebenso seitlich, unten oder in beliebiger sonstiger statischer oder mobiler Position und Orientierung angebracht sein.

Zwei Kameramodule 14a, 14b sind in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise einem externen Standardcomputer, internen digitalen Bausteinen wie Mikroprozessoren, ASICs (Application Specific Integrated Circuit), FPGAs (Field Programmable Gate Array), GPUs (Graphics Processing Unit) oder Mischformen davon. Da das Erzeugen der Tiefenkarte und deren Auswertung sehr rechenintensiv ist, wird vorzugsweise eine zumindest teilweise parallele Architektur gebildet.

Die Steuer- und Auswertungseinheit 24 umfasst unter anderem eine Stereoskopieeinheit 26, eine Konfigurationseinheit 28 und eine Objekterkennungseinheit 30. Sie erzeugt außerdem mit Hilfe der Beleuchtungseinheit 22 das strukturierte Beleuchtungsmuster und empfängt Bilddaten der Bildsensoren 16a, 16b. Aus diesen Bilddaten berechnet die Stereoskopieeinheit 26 mit Hilfe einer stereoskopischen Disparitätsschätzung die dreidimensionalen Bilddaten beziehungsweise die Tiefenkarte des Raumbereichs 12.

Mit Hilfe der Konfigurationseinheit 28 sind in dem Raumbereich 12 virtuelle Detektionsfelder 32 festgelegt, die dabei helfen, die Szenerie zu segmentieren. Wie die gesamte Steuer- und Auswertungseinheit 24 kann auch die Konfigurationseinheit 28 extern implementiert und innerhalb des 3D-Sensors 10 lediglich eine rudimentäre Konfigurationseinheit 28 mit einem Speicher und einer Schnittstelle zum Empfangen und Ablegen der geometrischen Repräsentationen der konfigurierten Detektionsfelder 32 vorgesehen sein. Die Detektionsfelder 32 bilden als Schutzfelder eine virtuelle Wand, um eine hier als Roboterarm 34 dargestellte Gefahrenquelle gegenüber unerlaubten Objekteingriffen abzusichern. Alternativ handelt es sich um Warnfelder oder um Detektionsfelder für nicht sicherheitsrelevante Auswertungen wie Messfelder.

Die Objekterkennungseinheit 30 wertet, häufig in Echtzeit, die Tiefenkarte auf Objekteingriffe in die Detektionsfelder 32 aus. Dies wird weiter unten näher erläutert. Im Falle eines als Warn- oder Schutzfeld definierten Detektionsfeldes 32 löst ein Objekteingriff über eine Warn- oder Abschalteinrichtung 36, die wiederum in die Steuerung 24 integriert sein kann, ein Warnsignal oder ein sicherheitsgerichtetes Abschaltsignal aus, welches über einen sicheren Ausgang 38 (OSSD, Output Signal Switching Device) ausgegeben wird, um beispielsweise den Roboterarm 34 abzusichern oder anzuhalten.

In einer bevorzugten Ausführungsform ist der 3D-Sensor 10 für sicherheitstechnische Anwendungen fehlersicher ausgelegt. Dies kann unter anderem bedeuten, dass der 3D-Sensor 10 sich selber, auch in Zyklen unterhalb der geforderten Ansprechzeit, testen kann, Defekte der Bildsensoren 16a-b oder der Beleuchtungseinheit 22 erkennt, oder dass die Steuerung 24, die Warn- oder Abschalteinrichtung 36 und/oder der Ausgang 38 sicher, beispielsweise zweikanalig ausgelegt sind beziehungsweise selbstprüfende Algorithmen verwenden. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

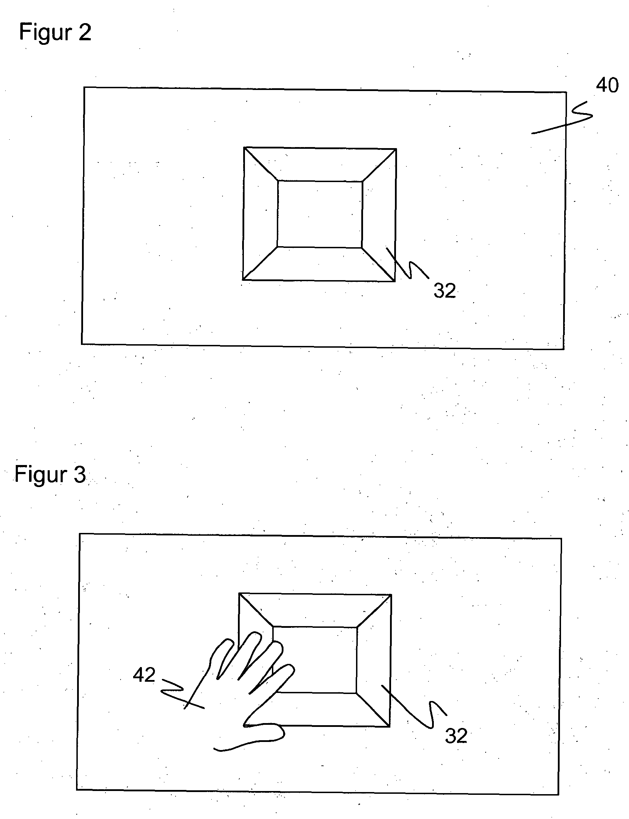

Figur 2 zeigt ein Beispiel einer sogenannten Referenzkarte 40, die vorzugsweise zur Vorbereitung der eigentlichen Auswertung in der Objekterkennungseinheit 30 aus den Detektionsfeldern 32 berechnet wird. Die Referenzkarte 40 entsteht aus geometrischen Definitionen der Detektionsfelder 32, die aber bereits in die projektive Perspektive des 3D-Sensors 10 umgerechnet sind. Bei dem in Figur 2 gezeigten, quaderförmigen Detektionsfeld 32 "fallen" deshalb die Seitenflächen nach außen. Die Referenzkarte 40 entspricht vorzugsweise in ihrer Auflösung in X- und Y-Richtung sowie in ihrem Bildausschnitt der Tiefenkarte und enthält in jedem Pixel den Abstand zu dem entsprechenden Punkt des Detektionsfeldes 32. Bei Mehrdeutigkeiten ist für sicherheitstechnische Auswertungen vorzugsweise der Punkt eines Detektionsfeldes 32 mit größtem Abstand eingetragen. Im Unterschied zu den ursprünglichen geometrischen Definitionen des Detektionsfeldes 32 kann die Referenzkarte 40 unmittelbar mit der Tiefenkarte verglichen werden. Im Prinzip ist die Referenzkarte 40 nämlich selbst eine Tiefenkarte einer virtuellen Szenerie, in der sich die Detektionsfelder 32 als geometrische Objekte befinden. Die Berechnung der Referenzkarte aus den Detektionsfeldern 32 erfolgt vorzugsweise schon zur Einrichtzeit und erfordert damit keine Rechenkapazitäten während der Auswertung.

Die Detektionsfelder 32 selbst werden in einem Konfigurationsmodus durch einen Benutzer oder Einrichter vorgegeben. Dazu verwendet der Einrichter eine Mensch-Maschine-Schnittstelle, die ihm Werkzeuge zur Positionierung und Dimensionierung von Detektionsfeldern 32 zur Verfügung stellt. Andere bekannte Möglichkeiten zur Festlegung der Detektionsfelder 32 sind einleitend genannt. Auf die konkrete Art der Eingabe von Detektionsfeldern 32 kommt es für die Erfindung nicht an. Jedenfalls entsteht als Ergebnis eine interne Repräsentation der Detektionsfelder 32, die in der Konfigurationseinheit 28 abgelegt ist. Zusätzlich zu der Geometrie der Detektionsfelder 32 wird auch deren Typ oder Funktion festgelegt, also ob es sich jeweils um ein Schutzfeld oder Warnfeld für sicherheitstechnische Zwecke oder ein Messfeld für eine Automatisierungsfunktion handelt.

Obwohl dies keine zwingende Voraussetzung für die Erfindung ist, werden die Detektionsfelder 32 üblicherweise euklidisch vorgegeben. Dies entspricht der intuitiven Denkweise des Benutzers bei der Planung und Einteilung des Arbeitsbereichs. Die projektive Perspektive des 3D-Sensors 10 dagegen ist unintuitiv und allenfalls spezialisierten Benutzern zugänglich. Eine Möglichkeit der Konfiguration besteht darin, in einem Einrichtprogramm einen zweidimensionalen Polygonzug als senkrecht zu der optischen Achse des 3D-Sensors 10 stehende Grundebene eines Detektionsfeldes einzuzeichnen sowie eine zugehörige Höhe vorzugeben. Eine interne Repräsentation der Geometrie eines solchen verallgemeinerten Zylinders kann dann aus den Eckpunkten des Polygonzuges sowie einer Höheninformation bestehen. Zur Auswertung lassen sich derartige Zylinder in einem Unterteilungsverfahren in die Grundfläche, die Deckelfläche sowie jeweils viereckige Abschnitte der Mantelfläche zerlegen.

Eine Beschränkung auf verallgemeinerte Zylinder erleichtert den Einstieg in die Konfiguration, ist aber technisch nicht notwendig. Beispielsweise können Grundfläche und Deckelfläche des Zylinders beliebig geformte Oberflächen haben, oder die Verbindung zwischen zwei Eckpunkten eines Polygonzugs wird durch gekrümmte Linien wie Splines angegeben. Man kann sich auch ganz von Zylindern lösen, beliebige dreidimensionale Körper als Detektionsfelder 32 zulassen und diese durch geeignete Repräsentationen erfassen, wie Mittelpunkt und Radius bei einer Kurve, oder in bekannter Weise deren Außenflächen durch ein Polygonnetz approximieren.

In einer beispielhaften konkreten Berechnung wird die Referenzkarte 40 vorzugsweise zunächst in ihren Bildpunkten oder Pixeln auf einen geeigneten Anfangswert initialisiert. Anschließend wird in einer Strahlrückverfolgung für jedes Pixel eine räumlich verlaufende Gerade zu einem Nullpunkt an dem 3D-Sensor 10 gezogen und geprüft, welche Grenzflächen eines Detektionsfeldes 32 geschnitten werden. Der Nullpunkt ergibt sich als Durchstoßpunkt der optischen Achse des 3D-Sensors 10 durch die Abbildungsebene. Kommt es zu einem Schnitt, wird dessen Höhenwert in dem entsprechenden Pixel der Referenzkarte 40 übernommen. Ansonsten wird eine Null zurückgeschrieben, um anzuzeigen, dass in diesen Sichtrichtungen keine Detektionsfelder 32 liegen. Insbesondere wenn mehrere Detektionsfelder 32 einer einzelnen Referenzkarte 40 zugewiesen sind, können sich auch mehrere Schnittpunkte mit unterschiedlichen Grenzflächen ergeben, so dass mehrere Höhenwerte in ein und demselben Pixel abgespeichert werden müssten. In solchen Fällen muss in Abhängigkeit der zugrundeliegenden Anwendung eine Vorgehensweise definiert werden. In Applikationen, bei denen die Sicherheit durch Gefährdung von Maschinen im Mittelpunkt steht, sollte beispielsweise der jeweils größte Abstand abgespeichert werden, und die anderen Werte werden in diesem Fall verworfen.

Die Berechnung der Referenzkarte 40 kann zur Einrichtzeit stattfinden und belastet dann die Rechenkapazitäten zur Laufzeit nicht, wo die Referenzkarten 40 der Objekterkennungseinheit 30 bereits zur Verfügung stehen. Damit wird der Aufwand verringert, um zur Laufzeit anhand der jeweils erfassten Tiefenkarte das Segmentierungsproblem zu lösen, ob sich ein Tiefenwert innerhalb eines Detektionsfeldes 32 befindet oder nicht.

Diese Aufgabenstellung für die Objekterkennungseinheit 30 ist in Figur 3 illustriert, in der ein Detektionsfeld 32 von einem Objekt 42 der Tiefenkarte überlagert ist. Diese Überlagerung dient vor allem dem Verständnis und stellt keinen zwingend erforderlichen Auswertungsschritt dar. Man erkennt mit dem Auge, dass ein Teil des Objekts 42 das Detektionsfeld 32 überlagert, ein anderer Teil nicht. Ohne Tiefenwerte ist allerdings nicht erkennbar, ob das Objekt 42 in Tiefenrichtung in das Detektionsfeld 32 eingreift oder es abschattet. Außerdem gehen in dieser Darstellung die Größenverhältnisse verloren, so dass nicht klar ist, ob ein Objekt 42, das in ein Detektionsfeld 32 eingreift, die Mindestgröße aufweist und somit eine Objektdetektion auslöst oder ob es klein genug ist, um bei dem geforderten Auflösungsvermögen noch in dem Detektionsfeld 32 toleriert zu werden. Dabei ist die Mindestgröße vorzugsweise in einer metrischen Einheit angegeben, beispielsweise 70 mm. Gemäß der Sensorspezifikation müssen Objekte, Abschattungen oder Lücken in der Tiefenkarte, deren Abmessungen der Mindestgröße entsprechen oder diese übertreffen, in einem Detektionsfeld erkannt werden.

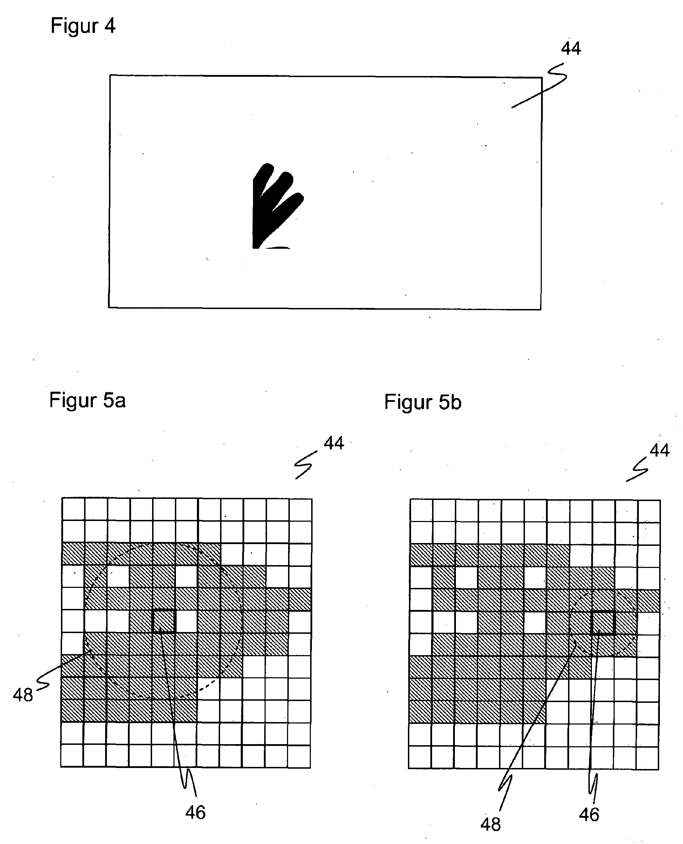

Figur 4 zeigt eine Differenzkarte, die durch pixelweise Differenz zwischen den Abstandswerten der auszuwertenden Tiefenkarte und der vorab berechneten Referenzkarte entsteht. Statt die Differenzen selbst zu speichern, was in einer alternativen Ausführungsform möglich ist, wird lediglich das Vorzeichen als 1-Bit-Wert gespeichert, wodurch eine Binärkarte 44 entsteht. Zu deren Berechnung wird von dem aktuellen Tiefenbild die zu mindestens einem Detektionsfeld 32 gehörige Referenzkarte 40 subtrahiert. Ein positives Vorzeichen dieser Differenz klassifiziert die für die Auswertung relevanten Informationen, die in Figur 4 als schwarze Pixel gezeigt sind. Es bedeutet nämlich, dass sich in dem jeweiligen Pixel eine Objektstruktur 42 der Tiefenkarte in einem Detektionsfeld 32 befindet oder eine Abschattung erzeugt, welche das Detektionsfeld 32 durchdringt. Aus sicherheitsrelevanten Gesichtspunkten müssen derartig verdeckte Bereiche bei einem sicherheitsgerichteten 3D-Sensor 10 mitberücksichtigt werden. Ein negatives Vorzeichen dagegen steht für Hintergrund, der als weißer oder leerer Bereich verbleibt und für die Auswertung auf Objekteingriffe in Detektionsfelder 32 keine Rolle spielt.

Die Werte der Referenzkarte 40 in Sichtrichtungen, in denen kein Detektionsfeld 32 liegt, sollten bei der Erstellung der Referenzkarte 40 geeignet initialisiert oder gesetzt sein, damit sich unabhängig von dem zugehörigen Wert der Tiefenkarte immer ein negatives Vorzeichen ergibt. In solchen Pixeln kann kein relevanter Objekteingriff vorliegen, da es in dieser Richtung gar kein Detektionsfeld 32 gibt.

Wie einleitend beschrieben, sind Tiefenkarten meist nicht vollständig, sondern weisen Lücken oder Pixel mit unzuverlässigen Abstandswerten auf. Solche Lücken werden aus Sicherheitsgründen vorzugsweise wie eine Objektstruktur direkt an der Empfangsoptik behandelt und dafür Pixel in Lücken auf den Abstand Null gesetzt. Damit erübrigt sich eine Fallunterscheidung zur besonderen Behandlung von Lücken in der nachgelagerten Auswertung.

Schwarze Pixel in der in Figur 4 gezeigten Binärkarte 44 bedeuten demnach Objekte 42 in Detektionsfeldern 32 oder Abschattungen, welche ein Detektionsfeld betreffen. Selbst wenn das Ziel der Auswertung die binäre Feststellung von Schutzfeldeingriffen ist, erschöpft sich die Auswertung aber noch nicht darin, die bloße Existenz mindestens eines schwarzen Pixels festzustellen. Das wäre äußerst störanfällig mit der Folge keiner oder sehr geringer Verfügbarkeit des 3D-Sensors 10. Stattdessen erfolgt eine weitere Auswertung, ob die schwarzen Pixel tatsächlich den Eingriff eines Objekts 42 der aufzulösenden Mindestgröße in ein Detektionsfeld 32 anzeigen. Die Auswertung ist durch die Binärkarte 44 erheblich vereinfacht, weil nur noch die Bereiche schwarzer Pixel zu prüfen sind.

Figur 5 illustriert diese Auswertung in einem Ausschnitt der Binärkarte 44. Die jeweils zu prüfende Sichtrichtung entspricht einem mit fettgedruckter Linie markierten Pixel oder Aufpunkt 46. Um alle Objekteingriffe zu erfassen, wird der Aufpunkt 46 systematisch über die Binärkarte verschoben. Figur 5a und 5b zeigen zwei verschiedene Aufpunkte 46 dieses systematischen Durchlaufs.

Ob in der durch den Aufpunkt 46 bezeichneten Sichtrichtung ein Objekt 42 der Mindestgröße in ein Detektionsfeld 32 eingreift, wird mit Hilfe von Schablonen 48 entschieden. Schablonen 48 können allgemein geometrische Definitionen oder Entfernungsbilder wie die Tiefenkarte sein, sind aber bevorzugt Binärbilder, um einen direkten Vergleich mit der Binärkarte 44 zu ermöglichen. Die in Figur 5 als Schablonen 48 eingezeichneten Kreise werden dazu anders als vereinfachend dargestellt als Binärbild diskretisiert, bestehen also beispielsweise aus den Pixeln, die auf und innerhalb der Kreislinie liegen. Schablonen 48 sind nicht auf eine Kreisform beschränkt, diese ist aber besonders geeignet, um isotrop auf eine geforderte Mindestgröße der Objekte 42 zu prüfen.

Die Schablonen 48 variieren in ihrer Größe und gegebenenfalls auch ihrer Form je nach Sichtrichtung beziehungsweise Aufpunkt 46. Damit berücksichtigen die Schablonen 48 die Auswirkungen der projektiven Abbildung, die durch unterschiedliche Positionen und Entfernungen von Detektionsfeldern 32 verursacht werden. Die Schablonen 48 hängen außerdem von der aufzulösenden Mindestgröße ab.

Um nun einen Aufpunkt 46 auf einen Objekteingriff zu prüfen, wird die Schablone mit einer den Aufpunkt 46 umgebenden Nachbarschaft der Binärkarte verglichen. Im Fall der Figur 5a ergibt sich je nachdem, ob die Schablone 48 den unten rechts von der Kreislinie angeschnittenen Pixel mit umfasst, eine Abweichung von fünf oder sechs Pixeln, die in der Binärkarte nicht gesetzt sind. In einer Auswertung, die perfekte Übereinstimmung fordert, ist damit kein Objekteingriff erkannt. Handelt es sich bei dem Detektionsfeld 32 um ein Schutzfeld, so wird somit aufgrund dieses Aufpunktes 48 keine sicherheitsgerichtete Abschaltung ausgelöst. Es ist allerdings denkbar, gewisse Abweichungen noch zu tolerieren und den Vergleich trotz der abweichenden Pixel als Objekteingriff zu werten, wobei in diesem Beispiel das relative Gewicht der fehlenden Übereinstimmung schon relativ hoch ist. Dabei wird darauf hingewiesen, dass das Tolerieren von weißen Pixeln der Binärkarte 44 innerhalb einer Schablone 48 die Verfügbarkeit beeinträchtigt und nicht die Sicherheit. Nach einer ähnlichen Überlegung, mit der weiße Pixel der Binärkarte bei dem Vergleich toleriert werden, ist auch denkbar, weiße Pixel der Binärkarte 44 als Aufpunkt 46 zu wählen. Es ist dann zwar von vorneherein sicher, dass der Vergleich keine perfekte Übereinstimmung ergeben wird, aber eine Übereinstimmung innerhalb der Toleranz bleibt möglich.

Im Beispiel der Figur 5b ist die Übereinstimmung zwischen der Schablone 48 und der den Aufpunkt 46 umgebenden Nachbarschaft der Binärkarte 44 vollständig, es wird also ganz unabhängig von Toleranzen bei dem Vergleich ein Objekteingriff erkannt. Man erkennt sofort, dass ein Objekteingriff viel eher detektiert wird, wenn die Schablone 48 klein ist. Tatsächlich ließe sich die Sicherheit der Objektdetektion ohne Weiteres herstellen, indem in jedem Aufpunkt 46 die gleiche, kleinste denkbare Schablone 48 verwendet wird. Diese kleinste Schablone, im Grenzfall nur ein einziger Pixel, entspricht einem Objekt der Mindestgröße, das sich in maximaler Reichweite von dem 3D-Sensor 10 befindet. Eine derartige Objekterkennung wäre jedoch extrem anfällig für kleinste Störungen, so dass der 3D-Sensor 10 eine nur minimale Verfügbarkeit hätte.

Eine kleine Schablone 48 bedeutet demnach hohe Sicherheit, eine große Schablone 48 hohe Verfügbarkeit. Ein wesentlicher Vorteil der Erfindung besteht darin, dass ein optimaler Ausgleich gefunden ist, indem für jeden Aufpunkt 46 die größtmögliche Schablone 46 erzeugt wird, welche die Erkennung eines Objekts 42 der Mindestgröße noch garantiert.

Die Erzeugung der Schablonen 48 für alle zu prüfenden Aufpunkte 46 ist vergleichsweise aufwändig, und deshalb soll bevorzugt die Objekterkennungseinheit 30 zur Laufzeit so weit wie möglich davon entlastet werden. In einer bevorzugten Ausführungsform wird zu diesem Zweck vorab eine sogenannte LARA-Karte (lokal-adaptiver Radiergummi) oder Schablonenkarte erzeugt. Die LARA-Karte ist ein Pixelbild mit der Auflösung der Tiefenkarte, die wiederum auch der Binärkarte 44 entspricht. In den Pixeln enthält die LARA-Karte jeweils einen Verweis auf eine bestimmte Schablone 48, die für den korrespondierenden Aufpunkt 46 der Binärkarte 44 zu verwenden ist. Dabei handelt es sich beispielsweise um einen Index auf einen Schablonenspeicher, aus dem die Schablone 48 unmittelbar geladen werden kann, oder um einen Radius, mit dem die Objekterkennungseinheit 30 ohne besonderen Aufwand die relevante kreisförmige Nachbarschaft der Binärkarte 44 auffindet.

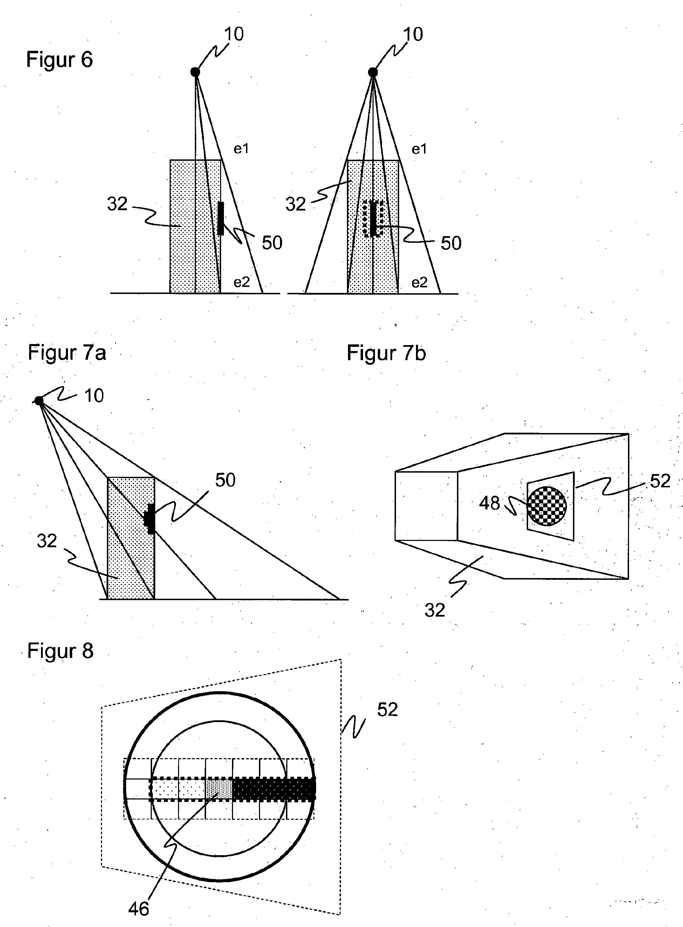

Anhand der Figuren 6 bis 8 wird nun erläutert, wie eine an einem Aufpunkt 46 zu verwendende Schablone 48 bestimmt wird. Auf diese Weise kann auch die LARA-Karte in einem Durchlauf durch alle denkbaren Aufpunkte 46 nach und nach erzeugt werden.

Figur 6 zeigt zwei zueinander senkrechte Seitenansichten eines euklidisch als Quader definierten Detektionsfeldes 32 sowie Projektionslinien zu dem 3D-Sensor 10. Anhand der Projektionslinien ist unmittelbar einsichtig, dass Strukturen mit zunehmender Entfernung zu dem 3D-Sensor 10 in weniger Pixel aufgelöst werden. Beispielsweise wird die obere Grenzfläche e1 des Detektionsfeldes 32 hier durch die Projektionslinien in doppelt so viele Segmente unterteilt wie die untere Grenzfläche e2. In schwarz ist eine lokale Umgebung 50 einer beispielhaften Sichtrichtung auf der fernsten Grenzfläche des Detektionsfeldes 32 eingezeichnet, die für die Berechnung der zugehörigen Schablone 48 im Folgenden genauer untersucht wird.

Etwas allgemeiner gilt für eine große Klasse von Geometrien von Detektionsfeldern 32, die sich in Polyonnetze aufteilen lassen, und insbesondere für Quader, dass jedem Punkt auf der Seitenfläche eine Höhe zugeordnet werden kann. Davon abhängig nimmt ein Bildpunkt an dieser Position eine bestimmte metrische Ausdehnung an. Dies kann durch eine Funktion s(h) angegeben werden, die für quadratisch geformte Bildelemente deren Seitenlänge beschreibt: $s(h) = h/f$. Die Höhe $h$ bezieht sich dabei auf einen bestimmen Abstand der Szene zu dem 3D-Sensor 10, dessen Brennweite $f$ in einem kalibrierten System als gegeben vorausgesetzt werden kann.

Figur 7a zeigt eine weitere Seitenansicht ähnlich Figur 6 eines seitlich verschobenen quaderförmigen Detektionsfeldes 32. Aus Sicht des 3D-Sensors 10 wird das Detektionsfeld 32 auf eine virtuelle Bildebene in Höhe der Grundfläche projiziert und ergibt damit das in Figur 7b dargestellte Bild im projektiven Raum. Ein Viereck 52 illustriert beispielhaft die Verzerrung von Größenverhältnissen auf der Seitenfläche des Detektionsfeldes 32 in Abhängigkeit von der Höhe. Die Sichtrichtung oder der Aufpunkt entspricht dem Mittelpunkt der gesuchten Schablone 48. Deren Radius bestimmt sich aus der geforderten Auslösung, also der Mindestgröße eines noch zu erkennenden Objekts 42. Stünde die hier relevante Grenzfläche senkrecht zu der optischen Achse des 3D-Sensors 10, so wäre der Radius gleich der Mindestgröße. Wegen der Schräge der Grenzfläche muss aber stattdessen ein verzerrter Schatten des Kreises auf der Grenzfläche untersucht und der kleinste Kreis gesucht werden, der sich dem Schatten einbeschreiben lässt.

Dazu zeigt Figur 8 das Viereck 52 noch einmal in einer Ausschnittsvergrößerung der Figur 7b. Um nämlich die Verzerrung konservativ abzuschätzen, reicht es aus, dem stärksten Gefälle zu folgen, also dem negativen Gradienten der relevanten Grenzfläche des Detektionsfeldes 32. In der Figur 8 bewegt man sich dazu von dem Aufpunkt 46 nach links. Es genügen drei Pixel, bis eine von den drei Pixeln abgeschattete virtuelle Linie im euklidischen Raum auf der Grenzfläche die Mindestgröße erreicht hat. Folglich bestimmen diese drei Pixel den Radius der gesuchten Schablone 48. In Gegenrichtung, also von dem Aufpunkt 46 nach rechts, bedarf es dagegen vier Pixeln, um im euklidischen Raum die Mindestgröße zu erreichen. Wie oben gesehen, muss aber für eine sichere Auswertung stets die kleinste Schablone 46 gewählt werden, so dass diese vier Pixel nicht maßgeblich sind.

Diese Gradientenabschätzung führt für die meisten Geometrien von Detektionsfeldern 32 zum Ziel. Für komplizierte Geometrien kann der nur lokal messende Gradient in die Irre leiten, beispielsweise wenn die global gesehen am meisten abfallende Richtung am Aufpunkt 46 zunächst mit einer Steigung beginnt. Außerdem findet die Gradientenabschätzung nur den kleinsten einbeschreibbaren Kreis, also eine kleinere Schablone 46 als für optimale Verfügbarkeit bei erhaltener Sicherheit möglich wäre. Dazu muss man nur erneut die vier Pixel in Figur 8 bei Bewegungsrichtung von dem Aufpunkt 46 nach rechts betrachten. Die Schablone 46 könnte demzufolge nach rechts etwas größer sein und würde damit etwas seltener sicherheitshalber auf ein Objekt 42 ansprechen, das die Mindestgröße gar nicht erreicht hat.

Eine allgemeine Lösung berechnet deshalb ausgehend von dem Aufpunkt 46 und damit dem Mittelpunkt der Schablone 48 Linienintegrale der euklidischen Distanz zu dem Aufpunkt 46 auf der relevanten Grenzfläche in alle möglichen Richtungen. Sobald ein Linienintegral die geforderte Mindestgröße überschreitet, wird in diese Richtung nicht weiter gesucht. Mit Überschreiten der Mindestgröße durch alle Linienintegrale ist das Verfahren beendet. Die zu den Linienintegralen gehörigen Bildpunkte werden in ein Binärbild eingetragen, das dann die Schablone 48 ergibt. Diese Schablone ist nicht mehr notwendigerweise kreisförmig, sondern folgt tatsächlich allen Verzerrungen und repräsentiert damit in optimaler Weise die Abschattung im denkbar schlechtesten Fall.

Diese Idee lässt sich für den kontinuierlichen Fall formalisieren. Gesucht ist für den Aufpunkt $\mathbf{u} \in \mathbf{R}^2$ und $\forall\alpha$

$\in [0,2\pi]$ die Lösung der Gleichung $l_\alpha(\mathbf{u}) := \iint\limits_\Omega I(\mathbf{u}+\mathbf{v}) \cdot \delta\big(\langle\mathbf{u}+\mathbf{v},\mathbf{r}_\alpha\rangle\big)d\mathbf{v} \overset{!}{=} \Delta_c$ , wobei $l_\alpha$ die Länge der Geraden

in Richtung $\alpha$ im projektiven Bildpunktraum ist, beginnend bei dem Aufpunkt u, $I(\cdot)$ eine Funktion bezeichnet, die zu einer gegebenen Bildpunktposition die zugehörige metrische Länge definiert, die Delta-Funktion $\delta(x) := \begin{cases} 1, & \text{falls } x=0 \\ 0, & \text{sonst} \end{cases}$ und

das Standard-Skalarprodukt $\langle.,.\rangle$ wie üblich verwandt sind, der Integrationsbereich $\Omega \subseteq \mathbf{R}^2$ dem Bildpunktraum entspricht, für die beiden Vektoren $\mathbf{u},\mathbf{v} \in \mathbf{R}^2$ und insbesondere $\mathbf{u},\mathbf{v} \in \Omega$ sowie $\mathbf{r}_\alpha := (-\sin(\alpha),\cos(\alpha))^T$ gilt und $\Delta_c$ die Mindestgröße oder das geforderte Auflösungsvermögen ist. Das Ausrufungszeichen über dem zweiten Gleichheitszeichen soll andeuten, dass für die links in Pixeln angegebene Größe rechts die metrische Entsprechung gesucht ist beziehungsweise umgekehrt. Für eine praktische digitale Realisierung muss die hier kontinuierlich eingeführte Gleichung außerdem diskretisiert werden. Die optimale Schablone 46 ergibt sich bei einer subpixelgenauen Repräsentation der Geraden im Bildpunktraum.

Eine pessimistische Abschätzung, die keine Sicherheitseinschränkung darstellt, kann realisiert werden, indem man die eben beschriebene Vorgehensweise beendet, nachdem das erste Linienintegral die durch die Mindestgröße gegebene Grenze erreicht beziehungsweise überschreitet. Die dadurch gebildete Schablone 46 wird vollflächig von der in dieser Abschätzung nicht mehr berechneten optimalen Schablone überdeckt und sorgt damit für eine sichere Auswertung, nicht aber eine optimale Verfügbarkeit.

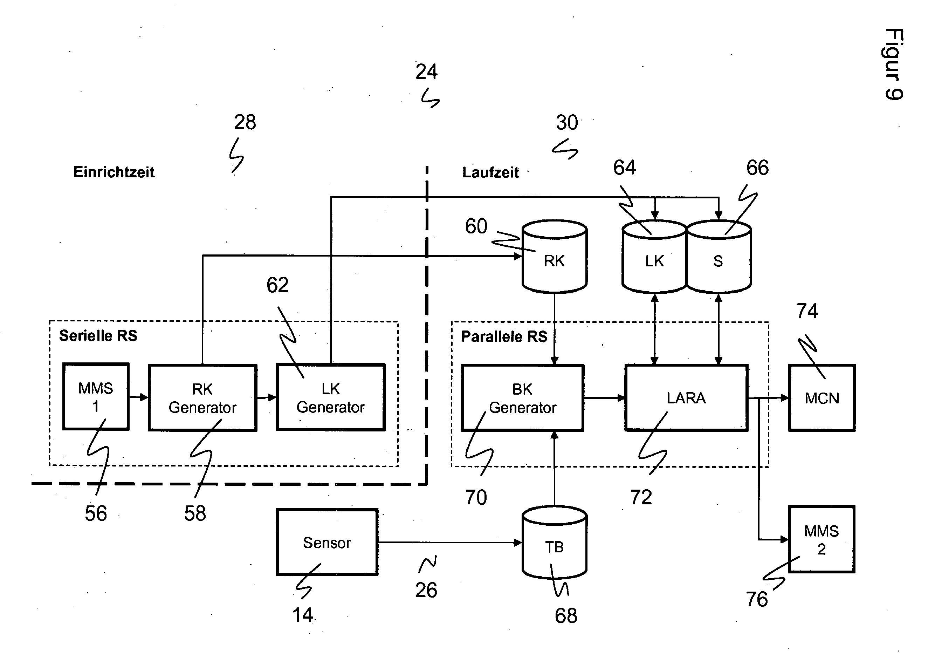

Figur 9 zeigt noch einmal eine Gesamtübersicht der Funktionsblöcke für eine Ausführungsform einer auf Schablonen 48 basierenden Objekterkennung. Diese Funktionsblöcke sind beispielsweise in der Steuer- und Auswerteeinheit 24 des 3D-Sensors 10 implementiert, wobei die Erfindung nicht auf eine bestimmte Verteilung auf interne und externe Komponenten festgelegt ist.

Die Auswertung zur Überprüfung auf Objekteingriffe in Detektionsfelder 32 im projektiven Raum, insbesondere Schutzfeldverletzungen, lässt sich in vorbereitende Aufgaben unterteilen, die bereits zur Einrichtzeit erledigt werden können, und Aufgaben während des Betriebs, die in vielen praktischen Fällen eine sehr schnelle Bearbeitung erfordern. Beispielsweise muss ein Sensor in der Sicherheitstechnik regelmäßig eine Ansprechzeit von wenigen 10 ms aufweisen, was nahezu Echtzeitanforderungen stellt.

Gemäß Figur 9 sind vorbereitende Funktionsblöcke der Konfigurationseinheit 28, und während des Betriebs abzuarbeitende Funktionsblöcke der Objekterkennungseinheit 30 zugewiesen. Zur Einrichtzeit genügt eine serielle Rechnerstruktur, also beispielsweise ein Ein-Kern-Prozessor, da hier keine Echtzeitauswertung verlangt wird, während zur Laufzeit vorzugsweise eine parallele Rechnerstruktur basierend auf Mehrkernprozessoren, FPGAs, GPUs eingesetzt wird. Diese Zuweisungen an bestimmte Einheiten der Steuer- und Auswertungseinheit 24 sowie die vorgeschlagene Hardwarearchitektur soll aber rein beispielhaft zu verstehen sein.

In der Einrichtzeit werden mit Hilfe einer ersten Mensch-Maschine-Schnittstelle 56 (MMS, auch bezeichnet als HMI, Human Machine Interface) die Detektionsfelder 32 definiert. Dies geschieht beispielsweise in einem CAD-Programm durch Vorgabe einer Grundfläche und einer Höhe. Einleitend sind einige weitere Alternativen beschrieben. Die Detektionsfelder 32 liegen danach in einer internen geometrischen Beschreibung für die Grenzflächen eines euklidischen Körpers vor, beispielsweise als Polygonzug der Grundfläche mit Angabe der Höhe eines allgemeinen Zylinders. Die Detektionsfelder 32 könnten auch im projektiven Raum definiert werden, dann entfällt ein entsprechender nachfolgender Zwischenschritt zur Umrechnung, aber diese Art der Konfiguration ist zunächst nicht intuitiv und erfordert viel Erfahrung.

Deshalb werden in einem Referenzkarten-Generator 58 die Detektionsfelder 32 in den projektiven Raum transformiert. Die in projektiver Geometrie repräsentierten Detektionsfelder werden dann als Referenzkarte 40 in einem dafür vorgesehenen Referenzkartenspeicher 60 gehalten und sind von dort zur Laufzeit abrufbar.

Auf Basis der Referenzkarte 40 erstellt ein Schablonen- oder LARA-Kartengenerator 62 beispielsweise nach einem unter Verweis auf die Figuren 6 bis 8 erläuterten Vorgehen die LARA-Karte mit Verweisen auf die für einen jeweiligen Aufpunkt 46 zu verwendende Schablone 46 und legt sie in einem LARA-Kartenspeicher 64 ab. Außerdem werden die zugehörigen Schablonen 46 selbst erzeugt und in einem Schablonenspeicher 66 abgelegt. Alternativ sind die Schablonen 66 fest vorgegeben, etwa als Kreise variierenden Durchmessers. Der LARA-Kartenspeicher 64 und der Schablonenspeicher 66 stehen zur Laufzeit zur Verfügung. Damit sind die vorbereitenden Schritte zur Einrichtzeit abgeschlossen.

Zur Laufzeit werden jeweils von den beiden Kameramodulen 14 aktuelle Bilder des Raumbereichs 12 aufgenommen und in der Stereoskopieeinheit 26 zu einer Tiefenkarte in einem Tiefenkartenspeicher 68 verrechnet.

Ein Binärkartengenerator 70 bildet die Differenz der Tiefenkarte mit der Referenzkarte 40 und aus dem Vorzeichen der Differenz eine Binärkarte 44. Aus deren Pixeln ist dann bekannt, an welchen Stellen Lücken der Tiefenkarte oder Objekte 42 beziehungsweise deren Abschattungen vor einem Detektionsfeld 32 liegen.

Ein mit LARA 72 bezeichneter Funktionsblock vergleicht anschließend Nachbarschaften von Aufpunkten 46 der Binärkarte 44 mit für den jeweiligen Aufpunkt 46 in der LA-RA-Karte gespeicherten Schablonen 48, wie dies oben im Zusammenhang mit Figur 5 erläutert wurde. Dadurch wird erkannt, an welchen Stellen ein Objekt 42 der Mindestgröße in ein Detektionsfeld 32 eingreift.

Das Ergebnis der Objektdetektion wird einer mit MCN 74 (Machine Control Network) bezeichneten übergeordneten Steuerung mitgeteilt, beispielsweise in Form eines sicherheitsgerichteten Abschaltsignals, wenn ein Schutzfeldeingriff erkannt wurde. Zusätzlich kann auch eine Ausgabe an eine zweite Mensch-Maschine-Schnittstelle 76 erfolgen, die möglicherweise mit der ersten Mensch-Maschine-Schnittstelle 56 identisch ist. Dadurch sind Diagnosen und ein Wiederanfahren der Anlage erleichtert, etwa indem angezeigt wird, welches Detektionsfeld 32 an welcher Position eine sicherheitsgerichtete Abschaltung ausgelöst hat.

Abschließend wird noch eine Liste mit Spezifikationen der in Figur 9 gezeigten Funktionsblöcke angegeben: Erste Mensch-Maschine-Schnittstelle 56

Eingabe: Benutzereingaben zur Definition von Detektionsfeldern 32 typischerweise im euklidischen Raum.

Ausgabe: Geometrische Informationen, welche in einem festen Koordinatensystem beispielsweise des 3D-Sensors 10 die Geometrie der Detektionsfelder 32 beschreiben. Beispielsweise Eckpunkte der Grundfläche und Höhe des Detektionsfeldes 32 für Quader oder verallgemeinerte Zylinder.

Referenzkarten-Generator 58

Eingabe: Ausgabe der ersten Mensch-Maschine-Schnittstelle 56.

(fortgesetzt)

| | |
|---|---|
| Verarbeitung: | Projiziert das jeweilige Detektionsfeld 32 auf die Höhe einer Grundfläche im projektiven Bildpunktraum. Durch die Projektion entstehenden Mehrdeutigkeiten werden aufgelöst, indem für die entsprechende Koordinate ein maximaler Abstand gewählt-wird. |
| Ausgabe: | Die in 2.5D projizierten Detektionsfelder 32 als Referenzkarte 40. |

Referenzkartenspeicher 60
Speicher zum Ablegen der Referenzkarte 40.
LARA-Kartengenerator 62

| | |
|---|---|
| Eingabe: | Referenzkarte 40. |
| Verarbeitung: | Ermittelt für jeden Bildpunkt der Referenzkarte 40 die zugehörige Schablone 48 für den späteren Gebrauch im Funktionsblock LARA 72 und berechnet die unterschiedlichen Schablonen 48 mit Hilfe der Referenzkarte 40. |
| Ausgabe: | LARA-Karte und Schablonen 48. |

LARA-Kartenspeicher 64
Speicher zum Ablegen der LARA-Karte.
Schablonenspeicher 66
Speicher zum Ablegen der Schablonen 48.
Tiefenkartenspeicher 68
Speicher zum Ablegen der aktuellen Tiefenkarte.
Binärkarten-Generator 70

| | |
|---|---|
| Eingabe: | Referenzkarte 40 und Tiefenkarte. |
| Verarbeitung: | Identifizieren von Szenepunkten aus der Tiefenkarte, die in einem Detektionsfeld 32 liegen oder dieses abschatten, mit Hilfe der Referenzkarte 40. Dazu Differenzbildung oder Anwendung einer Schwellwertfilterung ("kleiner gleich"), um Punkte zu finden, an denen aus Sicht des 3D-Sensors 10 ein Abstand der Tiefenkarte vor einem Abstand der Referenzkarte 40 liegt, und solche Punkte in einer Binärkarte auf Eins zu setzen. |
| Ausgabe: | Binärkarte 44. |

LARA 72 / Schablonenvergleich

| | |
|---|---|
| Eingabe: | Binärkarte 44, LARA-Karte, Schablonen 48. |
| Verarbeitung: | Wähle nacheinander zu prüfende Aufpunkte 46 der Binärkarte 44. Lade jeweils anhand des zu dem Aufpunkt 46 gehörigen Verweises der LARA-Karte die zugehörige Schablone 46 aus dem Schablonenspeicher 66. Vergleiche die Schablone 46 mit der korrespondierenden Bildpunktnachbarschaft des Aufpunkts 46 in der Binärkarte 44. Erkenne einen Objekteingriff in ein Detektionsfeld 32 an dem Aufpunkt 46 bei identischer Überdeckung oder mit einer Toleranz. Erzeuge in sicherheitstechnischer Anwendung bei Erkennen mindestens eines Eingriffs in ein Schutzfeld ein sicherheitsgerichtetes Abschaltsignal an das MCN 74. |
| Ausgabe: | Erkannte Objekteingriffe in Detektionsfelder 32, insbesondere sicherheitsgerichtetes Abschaltsignal für das MCN 74 und Informationen über die Objekterkennung für die zweite Mensch-Maschine-Schnittstelle 76 |

MCN 74 (im Falle einer sicherheitstechnischen Anwendung)

| | |
|---|---|
| Eingabe: | Summarischer Zustand aller Schutzfelder, vorzugsweise binär für Schutzfeldeingriff ja/nein |
| Ausgabe: | Sicherheitsgerichtetes Abschaltsignal an überwachte Maschine(n) |

Zweite Mensch-Maschine-Schnittstelle 76

Eingabe: Informationen über Objekte 42 in Detektionsfeldern 32, die für den Betreiber des 3D-Sensors von Interesse sind und auf denen beispielsweise Komfort-Funktionen zu Diagnose, verbesserter Konfiguration, Wiederanfahren der Anlage und dergleichen aufbauen können.

**Patentansprüche**

1. Optoelektronischer 3D-Sensor (10) zum Erkennen von Objekten (42) ab einer Mindestgröße innerhalb wenigstens eines vorgegebenen Detektionsfeldes (32), wobei der 3D-Sensor (10) einen 3D-Bildsensor (14a-b, 26) zur Aufnahme einer Tiefenkarte, eine Konfigurationseinheit (28) zum Festlegen von Detektionsfeldern (32) sowie eine Objekterkennungseinheit (30) zum Auswerten der Tiefenkarte aufweist, um Objekteingriffe in das Detektionsfeld (32) zu erkennen,
   **dadurch gekennzeichnet,**
   **dass** die Objekterkennungseinheit (30) dafür ausgebildet ist, eine jeweils zu prüfende Sichtrichtung (46) festzulegen, eine für die Sichtrichtung und Mindestgröße geeignete Schablone (48) aus den Detektionsfeldern (32) zu erzeugen, so dass die Schablonen (46) je nach aufzulösender Mindestgröße und Sichtrichtung unter Berücksichtigung der Auswirkungen der projektiven Geometrie variieren, die durch unterschiedliche Positionen und Entfernungen von Detektionsfeldern (32) verursacht werden, und die Schablone (48) mit einer aus der Tiefenkarte abgeleiteten Nachbarschaft in Sichtrichtung (46) zu vergleichen.

2. 3D-Sensor (10) nach Anspruch 1,
   wobei die Konfigurationseinheit (28) dafür ausgebildet ist, die für die Sichtrichtung (46) und Mindestgröße geeignete Schablone (48) aus dem projektiven Schatten einer virtuellen Kugel der Mindestgröße auf einer Grenzfläche eines Detektionsfeldes (32) zu bestimmen.

3. 3D-Sensor (10) nach Anspruch 1 oder 2,
   wobei die Konfigurationseinheit (28) dafür ausgebildet ist, die für die Sichtrichtung (46) und Mindestgröße geeignete Schablone (48) aufzufinden, indem von einem Aufpunkt (46), in dem ein Strahl in Sichtrichtung (46) eine Grenzfläche eines Detektionsfeldes (32) schneidet, virtuelle Linien einer euklidischen Länge entsprechend der Mindestgröße in verschiedene Richtungen gezogen werden, welche der Grenzfläche oder benachbarten Grenzflächen folgen, und die in Pixeln auf einem virtuellen zweidimensionalen Abbild aus Perspektive des 3D-Sensors (10) repräsentierten Linien die Schablone (48) festlegen.

4. 3D-Sensor (10) nach Anspruch 3,
   wobei nur eine virtuelle Linie gezogen wird, welche dem größten Gefälle folgt, und deren in Pixel gemessene Länge die Schablone (48) festlegt.

5. 3D-Sensor (10) nach Anspruch 3 oder 4,
   wobei die Linien in einer Subpixelauflösung vermessen werden.

6. 3D-Sensor (10) nach einem der vorhergehenden Ansprüche,
   wobei die Schablonen (48) Kreise verschiedenen Durchmessers sind.

7. 3D-Sensor (10) nach einem der vorhergehenden Ansprüche,
   wobei eine Vielzahl von Schablonen (48) vorgegeben ist und die Erzeugung der Schablonen (48) eine Auswahl einer vorgegebenen Schablone (48) umfasst.

8. 3D-Sensor (10) nach einem der vorhergehenden Ansprüche,
   wobei die Konfigurationseinheit (28) dafür ausgebildet ist, aus der Mindestgröße und den Detektionsfeldern (32) eine LARA-Karte (lokal-adaptiver Radiergummi) zu berechnen, die in ihren Pixeln einen Verweis enthält, welche Schablone 848) für eine dem Pixel entsprechende Sichtrichtung (46) zu verwenden ist.

9. 3D-Sensor (10) nach einem der vorhergehenden Ansprüche,
   wobei die Konfigurationseinheit (28) dafür ausgebildet ist, aus den vorgegebenen Detektionsfeldern (32) mindestens eine Referenztiefenkarte (40) zu erzeugen, in welcher die Detektionsfelder (32) in die projektive Perspektive des 3D-Sensors (10) und somit in ein direkt mit der Tiefenkarte vergleichbares Format umgerechnet sind.

**10.** 3D-Sensor (10) nach Anspruch 9,
wobei die Objekterkennungseinheit (30) dafür ausgebildet ist, eine Differenzkarte (44) als Differenz von Tiefenkarte und Referenztiefenkarte (40) zu bilden und insbesondere nur solche Sichtrichtungen (46) mit Hilfe einer Schablone (48) auf Objekteingriffe zu prüfen, in denen die Differenzkarte (44) ein Objekt (42) vor oder in einem Detektionsfeld (32) anzeigt.

**11.** 3D-Sensor (10) nach Anspruch 9,
wobei die Objekterkennungseinheit (30) dafür ausgebildet ist, eine Differenzkarte als Binärkarte (44) zu erzeugen, die in ihren Pixeln lediglich das Vorzeichen der Abstandswerte der Differenzkarte enthält, und nur solche Sichtrichtungen (46) mit Hilfe einer Schablone (48) auf Objekteingriffe zu prüfen, in denen die Binärkarte (44) ein bestimmtes Vorzeichen aufweist.

**12.** 3D-Sensor (10) nach einem der vorhergehenden Ansprüche,
wobei die Objekterkennungseinheit (30) dafür ausgebildet ist, einen Objekteingriff zu erkennen, wenn der Vergleich von Schablone (46) und Nachbarschaft in der Tiefenkarte eine Übereinstimmung mit einer festgelegten Korrelationsgüte ergibt.

**13.** 3D-Sensor (10) nach Anspruch 12,
wobei die Korrelationsgüte durch die Anzahl übereinstimmender, die Anzahl nicht übereinstimmender Pixel und/oder das Verhältnis übereinstimmender zu nicht übereinstimmender Pixel bewertet wird.

**14.** 3D-Sensor (10) nach einem der vorhergehenden Ansprüche,
wobei ein sicherer Ausgang (38) vorgesehen ist, über welchen durch die Objekterkennungseinheit (30) ein sicherheitsgerichtetes Abschaltsignal an eine überwachte Gefahrenquelle (34) ausgebbar ist, sobald ein unzulässiger Objekteingriff in ein als Schutzfeld ausgebildetes Detektionsfeld (32) erkannt ist.

**15.** Verfahren zum Erkennen von Objekten (42) ab einer Mindestgröße innerhalb wenigstens eines vorgegebenen Detektionsfeldes (32), wobei mit einem 3D-Bildsensor (14a-b, 26) eine Tiefenkarte aufgenommen, das wenigstens eine Detektionsfeld (10) in dem Sichtbereich des 3D-Bildsensors (14a-b, 26) festgelegt und die Tiefenkarte ausgewertet wird, um Objekteingriffe in das Detektionsfeld (32) zu erkennen,
**dadurch gekennzeichnet,**
**dass** für die Erkennung eines Objekts (42) der Mindestgröße innerhalb des Detektionsfeldes (32) eine jeweils zu prüfende Sichtrichtung (46) festgelegt, eine für die Sichtrichtung (46) und Mindestgröße geeignete Schablone (48) aus den Detektionsfeldern (32) erzeugt wird, so dass die Schablonen (46) je nach aufzulösender Mindestgröße und Sichtrichtung unter Berücksichtigung der Auswirkungen der projektiven Geometrie variieren, die durch unterschiedliche Positionen und Entfernungen von Detektionsfeldern (32) verursacht werden, und die Schablone (48) mit einer aus der Tiefenkarte abgeleiteten Nachbarschaft in Sichtrichtung (46) verglichen wird.

**Claims**

**1.** An optoelectronic 3D sensor (10) for the detection of objects (42) of a minimum size within at least one predefined detection field (32), wherein the 3D sensor (10) comprises a 3D image sensor (14a-b, 26) for capturing a depth map, a configuration unit (28) for defining detection fields (32), and an object detection unit (30) for evaluating the depth map to detect object intrusions into the detection field (32),
**characterized in that** the object detection unit (30) is configured to determine a respective viewing direction (46) to be tested, to generate a template (48) suitable for the viewing direction and minimum size from the detection fields (32) so that the templates (48) vary in dependence on minimum size to be resolved and viewing direction in consideration of effects of the projective geometry which are caused by the different positions and distances of detection fields (32), and to compare the template (48) with a neighborhood in viewing direction (46) derived from the depth map.

**2.** The 3D Sensor (10) according to claim 1,
wherein the configuration unit (28) is configured to determine the template (48) suitable for the viewing direction (46) and minimum size from the projective shadow of a virtual sphere of the minimum size onto a boundary surface of a detection field (32).

**3.** The 3D sensor (10) according to claim 1 or 2,

wherein the configuration unit (28) is configured to determine the template (48) suitable for the viewing direction (46) and minimum size by drawing virtual lines of a Euclidian length corresponding to the minimum size from a space point (46) where a ray in viewing direction (46) intersects a boundary surface of a detection field (32) in varying directions, following the boundary surface or adjacent boundary surfaces, and wherein the lines represented in pixels on a virtual two-dimensional image from the perspective of the 3D sensor (10) determine the templates (48).

4. The 3D sensor (10) according to claim 3,
wherein only one virtual line is drawn which follows the steepest slope, its length measured in pixels determining the template (48).

5. The 3D sensor (10) according to claim 3 or 4,
wherein the lines are measured in a sub pixel resolution.

6. The 3D sensor (10) according to any of the preceding claims,
wherein the templates (48) are circles of different diameter.

7. The 3D sensor (10) according to any of the preceding claims,
wherein a plurality of templates (48) is predefined and the generation of the templates (48) comprises a selection of a predefined template (48).

8. The 3D sensor (10) according to any of the preceding claims,
wherein the configuration unit (28) is configured to calculate a LARA map (Local-Adaptive eRAser) from the minimum size and the detection fields (32) which holds a reference in its pixels which template (48) is to be used for a viewing direction (46) corresponding to the pixel.

9. The 3D sensor (10) according to any of the preceding claims,
wherein the configuration unit (28) is configured to generate at least one reference depth map (40) from the predefined detection fields (32), the detection fields (32) in the reference depth map (40) being transformed into the projective perspective of the 3D sensor (10) and thus into a format directly comparable with the depth map.

10. The 3D sensor (10) according to claim 9,
wherein the object detection unit (30) is configured to generate a difference map (44) as the difference of depth map and reference depth map (40) and in particular to test with a template (48) for object intrusions only that viewing directions (46) where the difference map (44) indicates an object (42) in front of or in a detection field (32).

11. The 3D sensor (10) of claim 9,
wherein the object detection unit (30) is configured to generate a difference map as a binary map (44) which in its pixels merely holds the sign of the distance values of the difference map, and to test with a template (48) for object intrusions only that viewing directions (46) where the binary map (44) has a specific sign.

12. The 3D sensor (10) according to any of the preceding claims,
wherein the object detection unit (30) is configured to detect an object intrusion when the comparison of template (46) and neighborhood in the depth map results in a match of a predefined correlation quality.

13. The 3D sensor (10) according to claim 12,
wherein the correlation quality is evaluated by the number of matching pixels, the number of non-matching pixels and/or the ratio of matching to non-matching pixels.

14. The 3D sensor (10) according to any of the preceding claims,
wherein a safe output (38) is provided via which the object detection unit (30) is able to output a safety-related shutdown signal to a monitored source of danger (34) once an inadmissible object intrusion into a detection field (32) configured as a protection field is detected.

15. A method for the detection of objects (42) of a minimum size within at least one predefined detection field (32),
wherein a depth map is captured with an image sensor (14a-b, 26), the at least one detection field (32) is defined in the field of view of the 3D image sensor (14a-b, 26), and the depth map is evaluated in order to detect object intrusions into the detection field (32),
**characterized in that** for the detection of an object (42) of the minimum size within a detection field (2) a respective viewing direction (46) to be tested is determined, a template (48) suitable for the viewing direction (46) and minimum size from the detection fields (32) is generated so that the templates (48) vary in dependence on minimum size to be resolved and viewing direction in consideration of effects of the projective geometry which are caused by the different positions and distances of detection fields (32), and the template (48) is compared with a neighborhood in viewing direction (46) derived from the depth map.

## Revendications

**1.** Capteur optoélectronique en 3D (10) pour reconnaître des objets (42) à partir d'une taille minimum à l'intérieur d'au moins un champ de détection prédéterminé (32), ledit détecteur en 3D (10) comprenant un capteur d'images en 3D (14a-b, 26) pour prendre une carte de profondeur, une unité de configuration (28) pour fixer des champs de détection (32) ainsi qu'une unité de reconnaissance d'objets (30) pour exploiter la carte de profondeur afin de reconnaître des interventions d'objets dans le champ de détection (32),

**caractérisé en ce que**

l'unité de reconnaissance d'objets (30) est réalisée pour fixer une direction d'observation (46) respectivement à contrôler, pour générer à partir des champs de détection (32) un gabarit (48) approprié pour la direction d'observation et pour la taille minimum, de sorte que les gabarits (46) varient selon la taille minimum à résoudre et la direction d'observation en tenant compte des effets de la géométrie projective, qui sont provoqués par des positions et des éloignements différents des champs de détection (32), et pour comparer les gabarits (48) avec un voisinage, dérivé à partir de la carte de profondeur, dans la direction d'observation (46).

**2.** Capteur en 3D (10) selon la revendication 1, dans lequel l'unité de configuration (28) est réalisée pour déterminer le gabarit (48) approprié pour la direction d'observation (46) et pour la taille minimum à partir des ombres en projection d'une sphère virtuelle de la taille minimum sur une surface limite d'un champ de détection (32).

**3.** Capteur en 3D (10) selon la revendication 1 ou 2, dans lequel l'unité de configuration (28) est réalisée pour trouver le gabarit (48) approprié pour la direction d'observation (46) et pour la taille minimum en tirant, depuis un point d'incidence (46) auquel un rayon en direction d'observation (46) recoupe une surface limite d'un champ de détection (32), des lignes virtuelles avec une longueur euclidienne correspondant à la taille minimum dans différentes directions, lesdites lignes suivant la surface limite ou des surfaces limites voisines, et les lignes représentées en pixels sur une image virtuelle bidimensionnelle vue de la perspective du capteur en 3D (10) déterminent le gabarit (48).

**4.** Capteur en 3D (10) selon la revendication 3, dans lequel seule une ligne virtuelle est tirée qui suit la plus grande pente, et dont la longueur mesurée en pixels détermine le gabarit (48).

**5.** Capteur en 3D (10) selon la revendication 3 ou 4, dans lequel les lignes sont mesurées dans une résolution inférieure au pixel.

**6.** Capteur en 3D (10) selon l'une des revendications précédentes, dans lequel les gabarits (48) sont des cercles de différents diamètres.

**7.** Capteur en 3D (10) selon l'une des revendications précédentes, dans lequel une pluralité de gabarits (48) sont prédéterminés et la génération des gabarits (48) inclut une sélection d'un gabarit prédéterminé (48)

**8.** Capteur en 3D (10) selon l'une des revendications précédentes, dans lequel l'unité de configuration (28) est réalisée pour calculer à partir de la taille minimum et des champs de détection (32) une carte LARA (avec gomme à adaptation locale), qui contient dans ses pixels une indication quant au gabarit (48) qu'il s'agit d'utiliser pour une direction d'observation (46) correspondant au pixel.

**9.** Capteur en 3D (10) selon l'une des revendications précédentes, dans lequel l'unité de configuration (28) est réalisée pour engendrer, à partir des champs de détection prédéterminés (32), au moins une carte de profondeur de référence (40), dans laquelle les champs de détection (32) sont recalculés dans la perspective de projection du capteur en 3D (10) et ainsi dans un format directement comparable à la carte de profondeur.

**10.** Capteur en 3D (10) selon la revendication 9,
dans lequel l'unité de reconnaissance d'objets (30) est réalisée pour former une carte de différence (44) à titre de différence de la carte de profondeur et de la carte de profondeur de référence (40), et en particulier pour contrôler avec l'aide d'un gabarit (48) et uniquement dans des directions d'observation (46) des interventions d'objets dans lesquelles la carte de différence (44) indique un objet (42) devant ou dans un champ de détection (32).

**11.** Capteur en 3D (10) selon la revendication 9,
dans lequel l'unité de reconnaissance d'objets (30) est réalisée pour engendrer une carte de différence sous forme de carte binaire (44) qui contient dans ses pixels uniquement le signe des valeurs de distance de la carte de différence, et pour contrôler à l'aide d'un gabarit (48) des interventions d'objets uniquement dans des directions d'observation (46) dans lesquelles la carte binaire (44) comporte un signe déterminé.

**12.** Capteur en 3D (10) selon l'une des revendications précédentes,
dans lequel l'unité de reconnaissance d'objets (30) est réalisée pour reconnaître une intervention d'un objet quand la comparaison du gabarit (46) et du voisinage dans la carte de profondeur donne en résultat une coïncidence avec un degré de corrélation fixé.

**13.** Capteur en 3D (10) selon la revendication 12,
dans lequel le degré de corrélation est évalué grâce au nombre de pixels qui coïncident, au nombre de pixels qui ne coïncident pas et/ou au rapport des pixels qui coïncident sur les pixels qui ne coïncident pas.

**14.** Capteur en 3D (10) selon l'une des revendications précédentes,
dans lequel il est prévu une sortie de sécurité (38) via laquelle un signal de coupure à vocation de sécurité peut être envoyé par l'unité de reconnaissance d'objets (30) à une source de risque surveillée (34), dès qu'une intervention inadmissible d'un objet est reconnue dans un champ de détection (32) réalisé à titre de champ de protection.

**15.** Procédé pour la reconnaissance d'objets (42) à partir d'une taille minimum à l'intérieur d'au moins un champ de détection prédéterminé (32), dans lequel une carte de profondeur est prise avec un capteur d'images en 3D (14a-b, 26), ledit au moins un champ de détection (10) dans la zone d'observation du capteur d'images en 3D (14a-b, 26) est fixé et la carte de profondeur est évaluée afin de reconnaître des interventions d'objets dans le champ de détection (32),
**caractérisé en ce que**,
pour reconnaître un objet (42) ayant la taille minimum à l'intérieur du champ de détection (32), on fixe une direction d'observation respective à contrôler (46), on engendre à partir des champs de détection un gabarit (48) approprié pour la direction d'observation (46) et pour la taille minimum, de sorte que les gabarits (46) varient selon la taille minimum à résoudre et la direction d'observation en tenant compte des effets de la géométrie projective, qui sont provoqués par des positions et des éloignements différents des champs de détection (32), et le gabarit (48) est comparé avec un voisinage, dérivé de la carte de profondeur, dans la direction d'observation (46).

Figur 1

Figur 2

Figur 3

Figur 4

Figur 5a

Figur 5b

EP 2 819 109 B1

Figur 6

10

10

e1

32

50

e2

e1

32

50

e2

Figur 7a

Figur 7b

10

50

32

52

48

32

Figur 8

52

46

22

Figur 9

EP 2 819 109 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2053538 A1
- EP 2023160 B1
- EP 2048557 B1
- DE 102005063217 A1
- EP 2275990 B1